# FASCICULE DE BREVET EUROPEEN

(11) **EP 3 976 461 B1**
(45) Date de publication et mention de la délivrance du brevet: **22.05.2024**
(21) Numéro de dépôt: 20720836.4
(22) Date de dépôt: 29.04.2020
(51) Int. Cl.: B63B 21/66, G01V 1/38, B63B 27/08, B63B 27/36, B66D 1/30, B66D 1/38, B65H 75/42, B65H 75/44

(54) **DISPOSITIF SOUS-MARIN ET SYSTEME SOUS-MARIN**
UNTERWASSERVORRICHTUNG UND UNTERWASSERSYSTEM
UNDERWATER DEVICE AND UNDERWATER SYSTEM

(30) Priorité: 29.05.2019 FR 1905720
(43) Date de publication de la demande: 06.04.2022
(73) Titulaire: THALES, 92190 Meudon (FR)
(72) Inventeur: SUPPA, Vito, 06903 SOPHIA ANTIPOLIS Cedex (FR); RICARD, Michel, 06903 SOPHIA ANTIPOLIS Cedex (FR)
(74) Mandataire: Atout PI Laplace
(86) Numéro de dépôt international: PCT/EP2020/061831
(87) Numéro de publication internationale: WO 2020/239346

(56) Documents cités:
- FR-A1- 2 994 559
- JP-A- H0 921 659
- US-A- 3 576 295
- US-A- 3 966 171

## Description

Le domaine de l'invention est celui du stockage des dispositifs sous-marins sur treuil, à bord de bâtiments de surface. Elle concerne, plus particulièrement, le stockage des dispositifs sous-marins destinés à être remorqués par le bâtiment de surface et comprenant un câble tracteur, un corps allongé souple destiné à être tracté par le câble tracteur et un corps remorqué situé entre le câble tracteur et le corps allongé souple.

L'invention concerne, plus particulièrement, le domaine du stockage des dispositifs sous-marins du type sonar actif comprenant un câble tracteur lourd relié à un corps remorqué intégrant une antenne d'émission acoustique et reliant le câble tracteur à un corps allongé souple comprenant une antenne linéaire de réception acoustique. Le corps remorqué peut être un corps volumique suspendu au câble tracteur ou bien être apte à prendre une forme allongée selon un axe longitudinal et intégrant une antenne linéaire d'émission comprenant des transducteurs répartis selon l'axe longitudinal.

Le câble tracteur et l'antenne linéaire de réception présentent, à la différence du corps remorqué, généralement rigide, intégrant l'antenne d'émission, l'avantage de pouvoir être facilement enroulés autour d'un treuil.

Par suite, dans le cas d'une antenne d'émission intégrée dans un corps volumique profilé hydrodynamiquement, la récupération et le stockage de l'ensemble sont effectués en enroulant le câble tracteur sur un tambour d'un treuil, en remontant à bord le corps volumique, en décrochant le corps volumique du câble tracteur et de l'antenne linéaire de réception, puis en accrochant le câble tracteur au corps allongé souple. L'antenne linéaire de réception est finalement enroulée autour du même tambour que le câble tracteur, tandis que le corps volumique est stocké séparément sur le pont du navire.

Comme on peut le constater, de par son hétérogénéité de structure, un tel système s'avère peu facile à déployer, à récupérer et à stocker. Il nécessite en outre l'intervention d'opérateurs humains, notamment pour les différentes opérations d'accrochage et de décrochage du corps volumique, de sorte que le déploiement par gros temps d'un tel assemblage est non seulement difficile, mais aussi potentiellement dangereux pour l'intégrité physique des opérateurs. Cette solution faisant intervenir des opérateurs humains ne peut, par ailleurs, pas être automatisée ce qui empêche son utilisation depuis un véhicule autonome de surface aussi appelé « unmanned surface vehicles" ou USV en terminologie anglo-saxonne.

Une solution pour limiter les risques humains est d'utiliser un équipement de type grue qui permet de récupérer le corps volumique ou une antenne linéaire d'émission directement dans l'eau ou à sa sortie de l'eau et/ou de prévoir des moyens automatisés pour assurer le décrochage du corps volumique. Toutefois, ce type de mise en oeuvre est lourd et complexe. Un exemple de solution de ce type est divulgué dans le document US 9,001,623. Cette solution comprend un treuil autour duquel est enroulé le câble, et un support sur lequel on vient poser l'antenne d'émission, derrière le treuil, avec son axe longitudinal sensiblement horizontal et perpendiculaire à l'axe de rotation du treuil, l'antenne de réception est ensuite enroulée autour du treuil après déconnexion de l'antenne linéaire d'émission par des moyens automatiques. Toutefois, ce type de dispositif de manutention ne permet pas le stockage du sonar sur des petites plates-formes, l'antenne d'émission occupant un espace de longueur importante selon l'axe du navire porteur, derrière le treuil.

Une autre alternative est de remorquer les deux antennes indépendamment l'une de l'autre avec chacune son câble tracteur indépendant et son treuil indépendant. Cependant cette alternative est beaucoup plus volumineuse et coûteuse et n'est pas compatible des petites plates-formes.

La demande de brevet FR 2 925 231 déposée par la demanderesse divulgue un dispositif de manutention comprenant un unique treuil couplé à un sonar dans lequel l'antenne linéaire d'émission souple est configurée et fixée au câble de traction et à l'antenne de réception de sorte à s'étendre verticalement lors du remorquage et de sorte à venir s'enrouler autour d'un tambour du treuil, tout comme le câble de traction et l'antenne de réception. Toutefois, la mise en oeuvre opérationnelle de cette solution nécessite des réglages et est dédiée à une antenne légère difficile à réaliser avec un bon niveau de performances, les transducteurs électroacoustiques lourds permettant d'émettre avec un meilleur niveau sonore.

La demande de brevet FR 2994559 déposée par la demanderesse divulgue un dispositif de manutention comprenant un treuil configuré pour accueillir une antenne d'émission sous forme d'un corps volumique suspendu au câble dans le volume délimité par le tambour du treuil après enroulement autour du câble tracteur autour du tambour et permettant ensuite de venir enrouler l'antenne linéaire de réception autour du tambour. Toutefois cette solution ne convient pas au stockage d'antennes d'émission linéaires rigides et est réservée à une antenne d'émission compacte émettant une énergie acoustique qui n'est pas focalisée dans un plan horizontal qui présente une moins bonne efficacité énergétique. D'autres documents pertinents de l'art antérieur sont US 3 966 171 A, JP H09 21659 A ou US 3 576 295 A.

Un but de l'invention est de limiter au moins un des inconvénients précités.

A cet effet, l'invention a pour objet un dispositif de manutention selon la revendication 1.

Le dispositif de manutention comprend avantageusement au moins une des caractéristiques listées ci-après, prises seules ou en combinaison.

Avantageusement, le deuxième tambour est apte à être dans une position angulaire de réception, autour du deuxième axe par rapport au bâti, dans laquelle l'ouverture de réception est destinée à être traversée par le câble tracteur et le corps remorqué lors de la première étape d'enroulement.

Avantageusement, l'ouverture de réception est allongée selon le premier axe de rotation.

Le premier tambour et le deuxième tambour peuvent être concentriques.

En variante, le deuxième axe de rotation est distant du premier axe de rotation.

Le deuxième tambour peut être apte à être alternativement dans l'état ouvert et dans un état fermé dans lequel l'ouverture de réception est au moins partiellement fermée. En variante, le deuxième tambour est uniquement apte à être à l'état ouvert.

Avantageusement, le dispositif de manutention comprend un dispositif de trancannage apte à ordonner un enroulement du câble tracteur sur le treuil, le dispositif de trancannage comprenant deux déflecteurs latéraux espacés selon le premier axe de rotation, le dispositif de trancannage étant apte à être dans un état de trancannage dans lequel une faible distance sépare les déflecteurs latéraux selon le premier axe de rotation et dans un état de réception dans lequel une plus grande distance sépare les déflecteurs.

Le dispositif de manutention peut comprendre un ou plusieurs deuxièmes tambours.

Dans un mode de réalisation particulier, au moins un deuxième tambour comprend un capot mobile par rapport à une première partie du deuxième tambour, le capot étant apte à être dans une première position dans laquelle le capot ouvre le deuxième tambour de sorte qu'il comprenne l'ouverture de réception et dans une deuxième position dans laquelle le capot ferme sensiblement l'ouverture de réception de sorte que le deuxième tambour présente sensiblement une forme cylindrique.

L'invention se rapporte également à un système sous-marin comprenant le dispositif de manutention et le dispositif sous-marin.

Selon l'invention, le corps remorqué intègre une antenne d'émission d'ondes acoustiques et le corps allongé souple comprend une antenne de réception comprenant une pluralité de transducteurs électro-acoustiques répartis le long du corps allongé souple.

Selon l'invention, le corps remorqué est un corps allongé selon un axe longitudinal, l'antenne d'émission comprenant une pluralité de transducteurs électro-acoustiques répartis selon l'axe longitudinal.

Dans un autre exemple, le corps remorqué est un corps hydrodynamique compact présentant une forme générale aplatie et étant suspendu au câble tracteur lorsque le dispositif de manutention est déployé.

Avantageusement, le dispositif de manutention est configuré de façon à permettre de stocker le corps remorqué dans un volume entourant le premier tambour. Ce volume est entouré par le deuxième tambour sans que le corps remorqué ne sorte radialement du volume.

Avantageusement, le système sous-marin est configuré de sorte que, lors de la première étape d'enroulement, le corps remorqué traverse l'ouverture de réception dans une orientation dans laquelle l'axe longitudinal I est sensiblement parallèle au premier axe de rotation x1 et/ou de sorte que le corps remorqué 4 arrive à proximité du bâtiment porteur dans l'orientation dans laquelle l'axe longitudinal I est sensiblement parallèle au premier axe de rotation x1.

Avantageusement, le dispositif de manutention est configuré pour mettre en oeuvre les étapes suivantes, lors d'un un procédé de stockage du dispositif sous-marin initialement déployé :
- la première étape d'enroulement dans laquelle le premier tambour du treuil se trouvant dans l'état de découplage, est entraîné en rotation autour du premier axe de rotation par rapport au bâti de sorte à venir enrouler le câble tracteur autour du premier tambour, le câble tracteur passant au travers de l'ouverture de réception, et de sorte que le corps remorqué rentre dans le volume délimité par le deuxième tambour au travers de l'ouverture de réception,
- suivie d'une étape d'enroulement dans laquelle le deuxième tambour du treuil se trouvant dans l'état de couplage, est entraîné en rotation autour du deuxième axe de rotation de sorte à enrouler l'élément linéaire souple autour du deuxième tambour.

Le dispositif sous-marin peut comprendre un ou plusieurs corps remorqués.

D'autres caractéristiques et avantages de l'invention apparaîtront à la lecture de la description détaillée qui suit, faite à titre d'exemple non limitatif et en référence aux dessins annexés dans lesquels :
[Fig.1] la figure 1 représente schématiquement un système sous-marin selon l'invention comprenant un dispositif de manutention selon l'invention et un dispositif sous-marin,
[Fig.2] la figure 2 représente schématiquement un premier mode de réalisation d'un dispositif de manutention selon l'invention,
[Fig.3] la figure 3 représente schématiquement différentes phases d'un procédé de stockage ou de récupération d'un dispositif sous-marin par le dispositif de manutention selon l'invention,
[Fig.4] la figure 4 représente schématiquement un diagramme des étapes d'un procédé de stockage selon l'invention,
[Fig.5] la figure 5 représente schématiquement un système sous-marin comprenant un dispositif de manutention selon un deuxième mode de réalisation, lors d'une phase de remorquage du dispositif sous-marin,
[Fig.6] la figure 6 représente schématiquement un système sous-marin comprenant un dispositif de manutention selon un deuxième mode de réalisation, lors d'une phase de récupération du dispositif sous-marin par le dispositif de manutention,
[Fig.7] la figure 7 représente schématiquement un système sous-marin comprenant un dispositif de manutention selon un deuxième mode de réalisation, lors d'une phase de stockage du dispositif sous-marin par le dispositif de manutention,
[Fig.8] la figure 8 représente schématiquement un dispositif de trancannage d'un dispositif de manutention selon l'invention dans un état de trancannage,
[Fig.9] la figure 9 représente schématiquement un dispositif de trancannage d'un dispositif de manutention selon l'invention dans l'état de trancannage après translation des déflecteurs latéraux,
[Fig.10] la figure 10 représente schématiquement un dispositif de trancannage d'un dispositif de manutention selon l'invention dans un état de réception,
[Fig.11] la figure 11 représente schématiquement un exemple de corps remorqué de forme différente de celui des figures 1 à 7,
[Fig.12] la figure 12 représente schématiquement un dispositif sous-marin comprenant plusieurs corps remorqués,
[Fig.13] la figure 13 représente schématiquement un dispositif sous-marin comprenant plusieurs corps remorqués reliés entre eux de façon différente de ceux de la figure 12.

D'une figure à l'autre, les mêmes éléments sont repérés par les mêmes références.

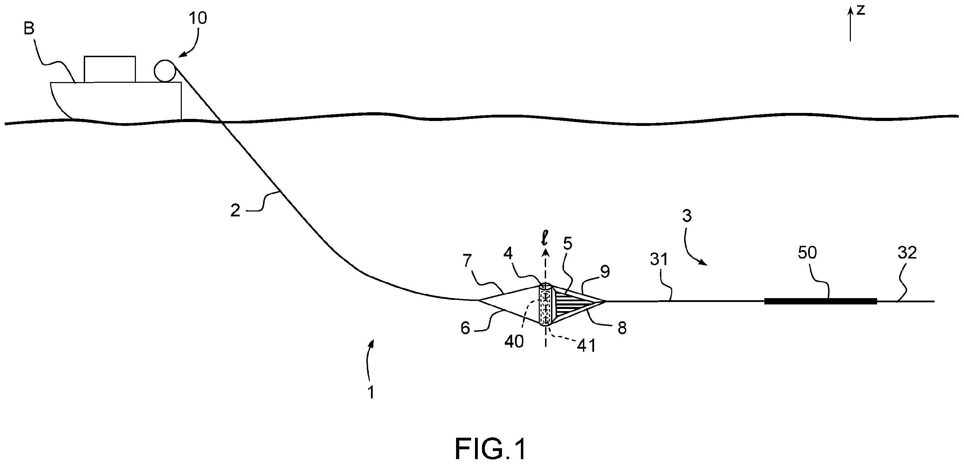

L'invention se rapporte, comme visible en figure 1, à un dispositif de manutention 10 à treuil, apte à stocker un dispositif sous-marin 1 destiné à être installé sur un bâtiment de surface B destiné à remorquer le dispositif sous-marin 1, via le dispositif de manutention 10.

L'invention concerne plus particulièrement un dispositif de manutention 10 apte à stocker un dispositif sous-marin 1 du type comprenant un câble tracteur 2, un corps allongé souple 3, destiné à être remorqué par le câble tracteur 2, et un corps remorqué 4. Le câble tracteur peut, par exemple, être un câble nu, un câble gainé, ou un câble caréné.

Le câble tracteur 2 présente avantageusement une flottabilité négative. On parle alors de câble lourd. Le poids du câble permet alors de positionner le corps remorqué en profondeur.

Le corps remorqué 4 est disposé entre le câble tracteur 2 et le corps allongé souple 3. Autrement dit, le câble tracteur 2 est relié au corps allongé souple via le corps remorqué 4. De la sorte, le corps remorqué est destiné à être remorqué, à l'état immergé, par le câble tracteur 2 et atteint le dispositif de manutention 10 après le câble tracteur 2 et avant le corps allongé souple 3 lors d'un procédé de stockage, à bord du bâtiment de surface, du dispositif sous-marin 1, initialement déployé et remorqué par le bâtiment de surface B. Le procédé de stockage permet de venir stocker le dispositif sous-marin par le dispositif de manutention 10 à bord du bâtiment de surface B. Le problème d'un stockage simple et compact de ce type de dispositifs sous-marins se pose.

Le corps remorqué 4 peut, par exemple, présenter une forme allongée de sorte à s'étendre longitudinalement selon un axe longitudinal I, comme dans l'exemple de la figure 1. L'axe longitudinal I est, par exemple, destiné à s'étendre selon un axe vertical z en remorquage. L'axe vertical z est défini par la force de gravité. Il s'agit d'un axe sensiblement perpendiculaire à la surface de la mer par état de mer calme qui définit alors un plan horizontal. Ce type d'objet allongé présente des dimensions beaucoup plus faibles, que selon l'axe longitudinal, dans les deux autres directions orthogonales perpendiculaires à l'axe longitudinal.

Le corps allongé présente, par exemple, une dimension plus importante que le diamètre du câble tracteur dans un plan perpendiculaire à l'axe longitudinal du câble tracteur et à celui du corps allongé souple à proximité du corps remorqué.

En variante, le corps remorqué se présente, par exemple, sous la forme d'un corps hydrodynamique, dit compact, suspendu au câble tracteur et présentant une forme générale aplatie, c'est à dire présentant des dimensions plus importantes selon deux directions orthogonales d'un plan horizontal que selon un axe vertical, lorsque ce corps 4 est remorqué par le câble tracteur 2.

Le dispositif de manutention est, en particulier, destiné à stocker un dispositif sous-marin, du type système sonar actif, comprenant un câble tracteur 2 à flottabilité négative, un corps remorqué 4 intégrant une antenne d'émission d'ondes acoustiques 40 et un corps allongé souple 3, à flottabilité neutre, comprenant une antenne linéaire de réception 50 comprenant une pluralité de transducteur électro-acoustiques repartis le long du corps allongé souple 3. Le corps allongé souple 3 comprend un câble intermédiaire 31 de flottabilité neutre reliant l'antenne de réception 50 de flottabilité neutre au corps remorqué 4 et/ou un filin de queue 32 de flottabilité neutre relié au corps remorqué 4 et/ou au câble intermédiaire 31 par l'antenne de réception 50.

Le corps remorqué 4 est, par exemple, un corps allongé s'étendant longitudinalement selon un axe longitudinal I et intégrant une antenne d'émission linéaire 40 comprenant une pluralité de transducteurs électro-acoustiques 41 répartis selon l'axe longitudinal l. Autrement dit, ce corps remorqué 4 est destiné à ne pas se déformer lors de son remorquage, de sa récupération à bord du bâtiment de surface et de son stockage à bord du bâtiment de surface.

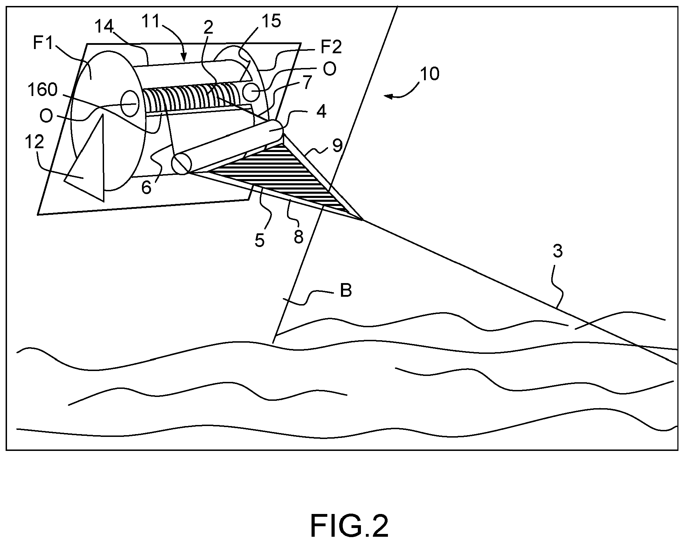

Une antenne d'émission linéaire est classiquement destinée à être remorquée dans une orientation verticale dans laquelle l'axe longitudinal I est vertical, de façon à émettre des ondes acoustiques principalement dans un plan horizontal comme représenté en figure 1. Le dispositif de manutention et le dispositif sous-marin peuvent être configurés de sorte que le corps remorqué 4 intégrant ce type d'antenne se rapproche d'un tambour du dispositif de manutention autour duquel on vient enrouler le câble tracteur 2, dans une orientation dans laquelle son axe longitudinal I est sensiblement parallèle à un axe de rotation du tambour, comme représenté en figure 2 et comme nous le verrons par la suite. A cet effet, le corps remorqué 4 est, par exemple, relié au câble 2 et au corps allongé souple 3 par l'intermédiaire de suspentes 6, 7, 8, 9.

Dans la réalisation non limitative des figures, le corps remorqué 4 est rigide de sorte à ne pas être déformé lors de son utilisation, c'est-à-dire lors du remorquage du dispositif sonar immergé, lors de la récupération du dispositif sous-marin et lors de sa mise à l'eau.

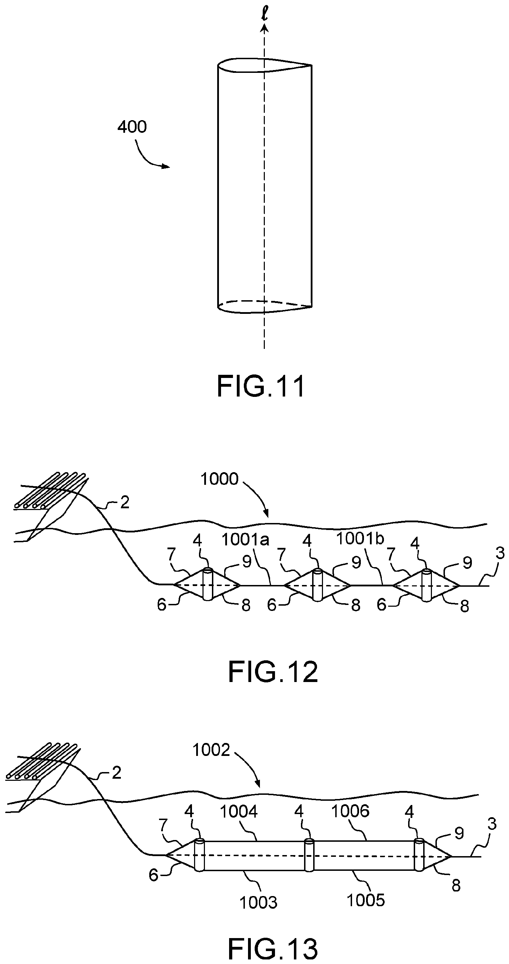

Le corps remorqué 4 peut être cylindrique ou être profilé hydrodynamiquement. Il peut présenter globalement une forme de goutte d'eau dans un plan sensiblement perpendiculaire à l'axe I comme le corps remorqué 400 représenté en figure 11.

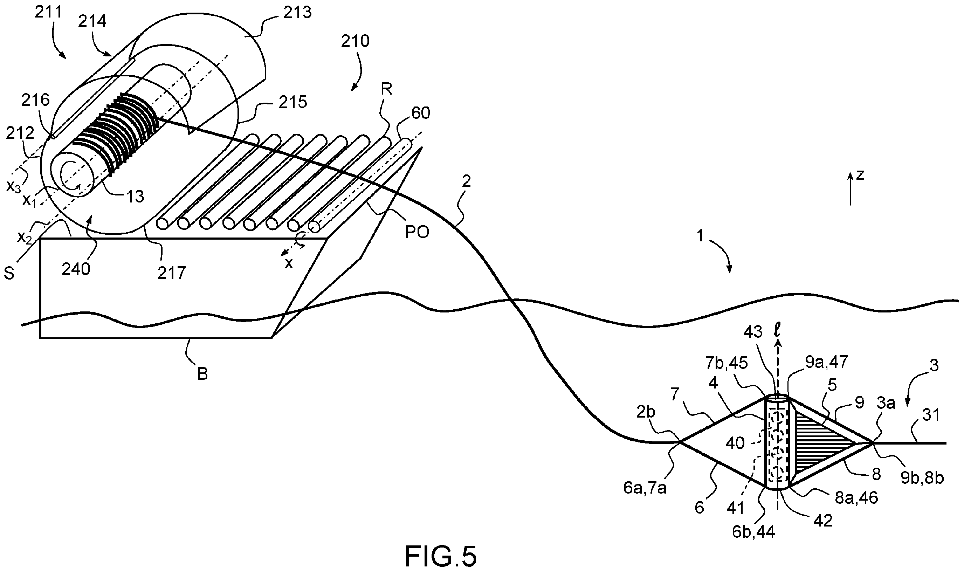

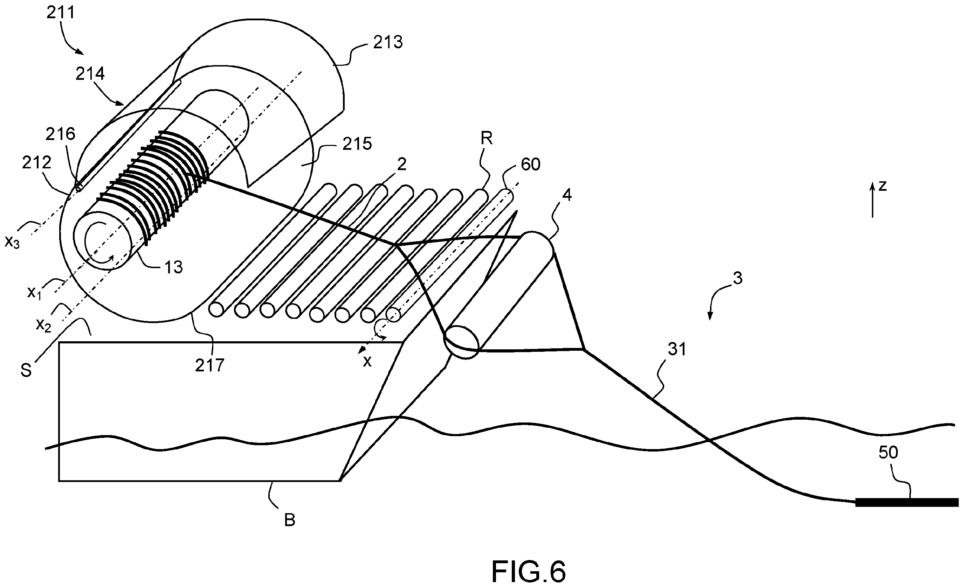

Il peut être muni d'un revêtement hydrodynamique présentant, de façon non limitative une forme de voile 5, comme visible en figure 5. Ce revêtement n'a pas été représenté en figures 6 à 7 pour plus de clarté. La voile 5 est, par exemple, installée entre des suspentes 8 et 9 reliant le corps remorqué 4 au corps allongé souple 3. Cette voile permet de limiter les vibrations induites par vortex. D'autres types de revêtements hydrodynamiques comme, par exemple, des gaines munies de cheveux ou de voiles gonflables peuvent être prévus.

Une antenne d'émission peut en variante être intégrée dans un corps compact suspendu au câble tracteur 2 lorsque le dispositif sous-marin est déployé.

La description qui suit présente les caractéristiques du dispositif de manutention selon l'invention dans son application au stockage d'un sonar actif à antenne d'émission linéaire. Cette application particulière permet de mettre en évidence le caractère avantageux de l'invention en général. Les caractéristiques présentées ici ne sont nullement spécifiques de cette application particulière et font partie intégrante de l'invention quelle que soit l'application considérée.

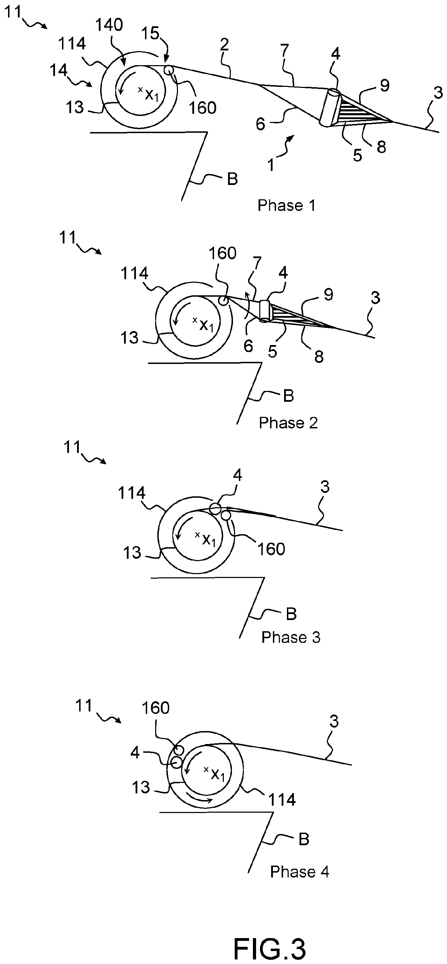

Un exemple de système sous-marin comprenant un dispositif de manutention 10 selon l'invention est représenté schématiquement en perspective en figure 2 et en vues de côtés en figure 3 dans des phases 1 à 4 successives d'un procédé de stockage du dispositif sous-marin 1 au moyen du dispositif de manutention 10 pour venir stocker le dispositif sous-marin à bord du bâtiment de surface. Il est à noter que la figure 2 représente une phase située entre les phases 2 et 3 visibles en figure 3.

Le dispositif de manutention 10 comprend un treuil 11 comprenant un bâti 12 visible uniquement en figure 2. Le bâti 12 est destiné à être fixé à une structure S du bâtiment de surface B.

Selon l'invention, le treuil 11 comprend un premier tambour 13 apte à tourner par rapport au bâti 12 autour d'un premier axe de rotation x1 et un deuxième tambour 14 entourant le premier tambour 13 et étant apte à tourner par rapport au bâti 12 autour d'un deuxième axe de rotation x2. Les tambours 13 et 14 sont concentriques dans la réalisation non limitative des figures 2 et 3 de sorte que l'axe x2 est l'axe x1.

Le deuxième tambour 14, entourant le premier tambour 13, présente un plus grand diamètre que le premier tambour 13.

Le treuil 11 est apte à être dans un état de découplage dans lequel le premier tambour 13 est apte à être entraîné en rotation autour de l'axe de rotation x1 par rapport au bâti 12 et est découplé du deuxième tambour 14 en rotation autour du premier axe de rotation x1 et autour du deuxième axe de rotation x2.

Cela permet de venir enrouler le câble tracteur 2 autour du premier tambour 13 lors d'une première étape d'enroulement lors de laquelle le premier tambour 13 est entraîné en rotation autour du premier axe x1 par rapport au bâti 12.

Le deuxième tambour 14 est apte, au moins lorsque le treuil est dans l'état de découplage, à être dans un état ouvert, tel que représenté en figures 2 et 3 (phases 1 et 2), dans lequel le deuxième tambour 14 présente une ouverture de réception 15. L'ouverture de réception 15 est susceptible d'être traversée par le corps remorqué 4 pour pénétrer à l'intérieur du volume 140 délimité par les tambours 13 et 14. Ce volume entoure le premier tambour 13 et est entouré par le deuxième tambour 14.

Le deuxième tambour 14 délimite un volume interne sensiblement cylindrique dont le diamètre correspond au diamètre du deuxième tambour.

Le treuil 11 est apte à être dans un état de couplage dans lequel le premier tambour 13 et le deuxième tambour 14 sont couplés en rotation autour du deuxième axe de rotation x2.

De préférence, les tambours 13 et 14 sont solidaires en rotation autour du deuxième axe lorsque le treuil 11 est dans l'état de couplage.

Ainsi, en entraînant le deuxième tambour 14 en rotation par rapport au bâti 12, autour de l'axe x2, lorsque le treuil 11 est dans l'état de couplage, une fois que le corps remorqué 4 est stocké dans le volume 140, le corps allongé souple 3 vient s'enrouler autour du deuxième tambour 14.

Ainsi, le dispositif de manutention 10 selon l'invention permet de stocker, dans un volume limité et sur un unique treuil 11, un câble tracteur 2 et un sonar actif à antenne d'émission linéaire 3, 4. Le dispositif de manutention selon l'invention permet de stocker le câble tracteur 2 autour du premier tambour 13, l'antenne linéaire d'émission dans le volume 140.

Cette invention est particulièrement intéressante lorsque le corps remorqué 4 présente au moins une dimension supérieure à celle du câble et à celle de l'élément allongé souple dans un plan perpendiculaire à l'axe longitudinal du câble au voisinage du corps remorqué ou est inapte à être enroulé autour des tambours du fait d'une certaine rigidité en flexion.

Ce dispositif de manutention est moins coûteux, moins volumineux et moins lourd qu'un dispositif qui comprend des treuils séparés pour stocker d'une part le câble tracteur et d'autre part le corps allongé souple.

De façon générale, l'invention est particulièrement intéressante pour le stockage, à bord du bâtiment de surface B, de dispositifs sous-marins, du type de celui des figures 2 et 3 comprenant un corps remorqué 4 destiné à être stocké sans se déformer, à partir d'une situation initiale totalement immergée. L'invention est particulièrement adaptée au stockage de ce type de dispositif sous-marin lorsque le dispositif sous-marin et le dispositif de manutention sont configurés pour que le corps remorqué 4 puisse traverser ou traverse l'ouverture 15 lors de la première étape d'enroulement, par exemple pour venir en appui sur le premier tambour 13 autour duquel on vient enrouler le câble tracteur 2, dans une orientation dans laquelle son axe longitudinal I est sensiblement parallèle à un axe de rotation x1 du premier tambour 13.

En effet, la forme d'un tambour 14 permet de ménager une ouverture de réception 15 présentant une forme d'une fente s'étendant longitudinalement selon l'axe x1 comme représenté en figures 2 et 3, qu'un corps remorqué 4 allongé peut traverser avec son axe longitudinal sensiblement parallèle à l'axe x1, lors de la première étape d'enroulement, sans subir de déformation. Le dispositif permet ainsi de réaliser des corps remorqués à antenne d'émission linéaire relativement lourds et longs et non déformables.

Avantageusement (mais non nécessairement), comme visible en figures 2 et 3 l'ouverture de réception 15 s'étend sensiblement sur toute la longueur du deuxième tambour 14 selon le premier axe de rotation x1. En variante, l'ouverture de réception 15 s'étend sur une partie de la longueur du deuxième tambour 14 selon le premier axe de rotation x1.

Avantageusement, le deuxième tambour 14 est apte à être positionné, et de préférence immobilisé, dans une position angulaire de réception, autour du deuxième axe x2, dans laquelle l'ouverture de réception 15 est traversée par le câble tracteur 2 lors de la première étape d'enroulement, comme visible en figures 2 et 3. Le câble 2 et le corps remorqué pouvant pénétrer dans le volume 140 au travers de la même ouverture de réception 15, le stockage du dispositif sous-marin ne nécessite pas d'opération manuelle ou automatique pour décrocher le corps remorqué 4 du câble tracteur 2.

Avantageusement, un même plan perpendiculaire à l'axe x1 est situé à égale distance des deux extrémités longitudinales du premier tambour 13 et à égale distance des deux extrémités longitudinales du deuxième tambour 14.

Avantageusement, le premier tambour 13 et le deuxième tambour 14 présentent la même longueur selon l'axe x1. Le deuxième tambour 14 entoure le premier tambour sur toute la longueur du premier tambour 13 selon l'axe x1. En variante, les tambours 13 et 14 sont décalés l'un par rapport à l'autre selon l'axe x1.

En variante, le deuxième tambour 14 est plus long que le premier tambour 13 selon l'axe x1 ce qui permet d'enrouler une plus grande longueur de corps allongé souple 3, ou inversement, le deuxième tambour 14 est moins long que le premier tambour 13 selon l'axe x1, ce qui permet d'enrouler une plus grande longueur de câble tracteur 2.

Avantageusement, le corps remorqué 4 est apte à pénétrer dans le volume 140 au travers de l'ouverture de réception 15 pour être stocké dans le volume 140 sans sortir radialement (par rapport à l'axe x2) du volume 140. Autrement dit, le corps remorqué 4 est à l'intérieur du cylindre du diamètre du deuxième tambour, formé autour de x2 sur toute la longueur du deuxième tambour. L'enroulement du corps allongé souple 3 autour du deuxième tambour 14 après stockage du corps remorqué 4 dans le volume 140 n'est alors pas gêné par le corps remorqué 4.

Avantageusement, le corps remorqué 4 est apte à pénétrer dans le volume 140 au travers de l'ouverture de réception 15 pour être stocké dans le volume 140 sans sortir radialement (par rapport à l'axe x2) du volume 140 une fois que le câble tracteur est enroulé autour du premier tambour 13.

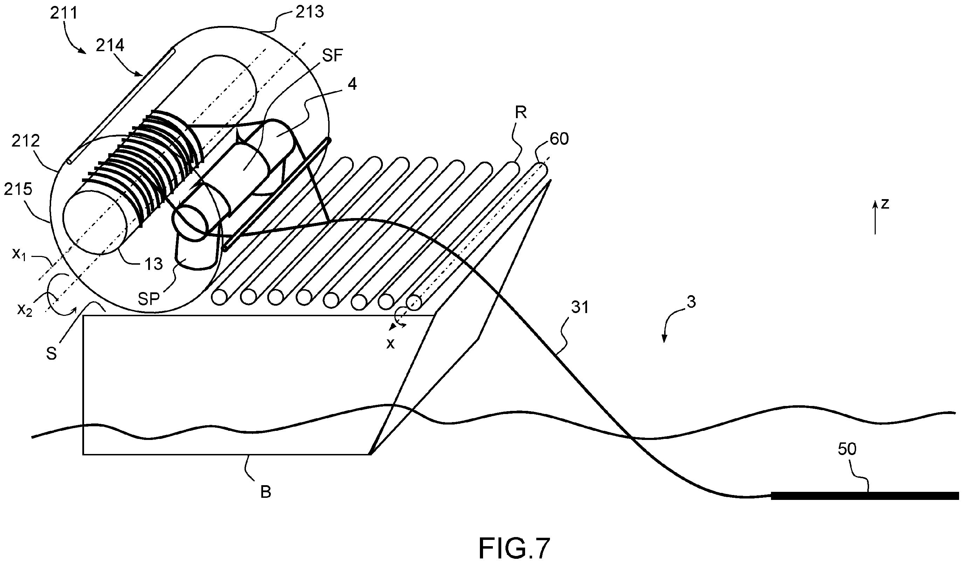

En figures 3 et 7, le corps remorqué 4 est apte à être entièrement stocké dans le volume 140. En variante, le corps remorqué 4 pourrait dépasser du volume 140 selon l'axe x2, par exemple, lorsque le corps remorque 4 est plus long que le deuxième tambour 14.

L'invention se rapporte également à un procédé de stockage et à un procédé de déploiement du dispositif sous-marin, aptes à être mis en oeuvre par le dispositif de manutention selon l'invention. Le dispositif de manutention peut être configuré pour mettre en oeuvre ces procédés lorsqu'une condition de récupération ou de mise à l'eau est vérifiée, par exemple, lorsqu'un dispositif de commande du dispositif de manutention reçoit un ordre de stockage ou respectivement de déploiement.

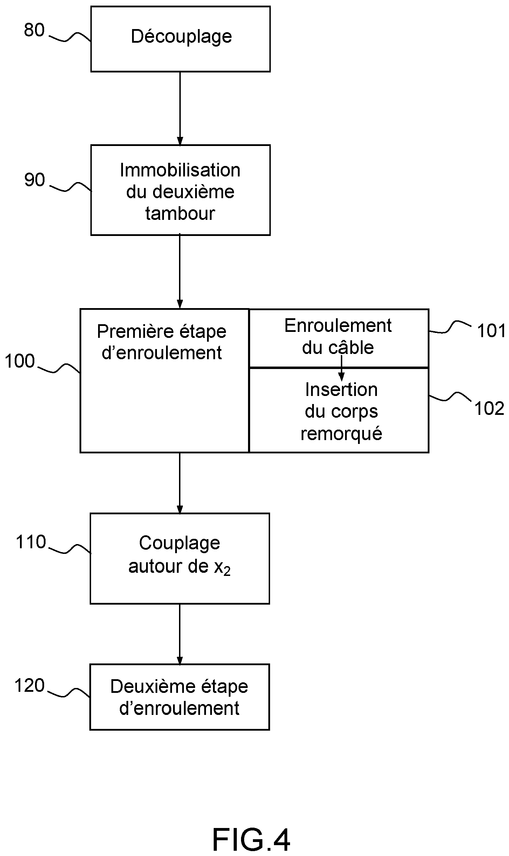

Le procédé de stockage (ou de récupération) comprend différentes phases représentées en figures 2 et 3 et reprises en figure 4.

Le procédé de stockage (ou de récupération) du dispositif sous-marin, initialement déployé et relié au premier tambour via le câble tracteur 2, comprend :
- une première étape d'enroulement 100 lors de laquelle le treuil 11 est dans l'état de découplage, le premier tambour 13 étant entraîné en rotation autour de l'axe de rotation x1, par rapport au bâti 12 de sorte à venir enrouler le câble tracteur 2, lors d'une étape 101, autour du premier tambour 13 (phases 1 et 2 de la figure 3), le câble tracteur 2 passant au travers de l'ouverture de réception 15 ou, dans une variante moins avantageuse, au travers d'une autre ouverture ménagée dans le deuxième tambour 14,
- une étape d'insertion du corps remorqué 4 dans le volume 140, lors d'une étape 102 (phase 3 de la figure 3), au travers de l'ouverture de réception 15,
- une deuxième étape d'enroulement 120 (phase 4 de la figure 3) lors de laquelle le treuil 11 est dans l'état de couplage, le deuxième tambour 14 étant entraîné en rotation autour du deuxième axe de rotation x2 de sorte que l'élément linéaire souple 3 vienne s'enrouler autour du deuxième tambour 14.

L'étape 102 peut être, dans un premier cas, une deuxième sous-étape 102 de la première étape d'enroulement 100 ou, dans un deuxième cas, une étape distincte la première étape d'enroulement 100.

Autrement dit, dans un premier cas, lorsque le treuil 11 est dans l'état de découplage, le premier tambour 13 étant entraîné en rotation autour de l'axe de rotation x1, le câble tracteur 2 vient s'enrouler autour du premier tambour 13 (phases 1 et 2 de la figure 3) en passant à travers l'ouverture de réception 15 puis le corps remorqué 4 passe à travers l'ouverture de réception 15, sous l'effet de l'entraînement du premier tambour 13 en rotation autour de l'axe de rotation x1 (phase 3 de la figure 3), pour pénétrer dans le volume 140 délimité par le deuxième tambour 14.

A cet effet, le deuxième tambour 14 est apte à être positionné, et de préférence immobilisé, dans une position angulaire dite de réception, autour de l'axe x2, dans laquelle l'ouverture de réception 15 est susceptible d'être traversée par le câble tracteur 2 et le corps remorqué 4, lors de la première étape d'enroulement. L'ouverture de réception 15 doit alors être dimensionnée pour que le corps remorqué puisse la traverser lors la première étape d'enroulement en fonction de l'orientation dans laquelle il se présente par rapport à l'ouverture.

Avantageusement, si la première étape d'enroulement se poursuit, le corps remorqué 4 vient en appui sur le premier tambour 13, sous l'effet de l'entraînement du premier tambour 13 en rotation autour de l'axe x1.

Lors de la deuxième étape d'enroulement 120, le deuxième tambour 14 est entraîné en rotation autour de l'axe x2 dans le même sens que le sens de rotation du premier tambour 13 pendant la première étape d'enroulement 100.

Le procédé de stockage d'un dispositif sous-marin initialement déployé est ainsi facilement automatisable ce qui permet d'éviter l'intervention d'un opérateur humain et les risques associés et permet le stockage du dispositif sous-marin à bord d'un USV.

Dans le deuxième cas le corps remorqué 4 ne pénètre pas dans le volume 140 au travers de l'ouverture de réception 15 sous l'effet de la rotation du premier tambour 13 autour de l'axe x1. L'étape 102 d'insertion du corps remorqué 4 dans le volume 140 en passant au travers de l'ouverture de réception 15 peut être réalisée ultérieurement à la première étape d'enroulement, par exemple, par un opérateur humain ou un outillage.

Un diagramme du procédé de stockage mis en oeuvre dans le premier cas est représenté en figure 4. Ce procédé comprend les étapes suivantes réalisées dans l'ordre suivant :
- découpler 80 le premier tambour 13 du deuxième tambour 14 en rotation des axes x1 et x2 par rapport au bâti 12 pour mettre le treuil 11 dans l'état de découplage, cette étape est mise en oeuvre par des moyens de couplage/découplage du treuil 11,
- immobiliser 90 le deuxième tambour 14 à l'état ouvert, en rotation par rapport au bâti 12 autour de son axe de rotation x2 dans la position angulaire de réception, cette étape est mise en oeuvre par des moyens d'immobilisation, comme par exemple un frein, un doigt de centrage ou un engrenage,
- la première étape d'enroulement 100 comprenant la première sous-étape 101 d'enroulement du câble tracteur et la sous-étape 102,
- une étape de couplage 110, du premier tambour 13 et du deuxième tambour 14 en rotation autour du deuxième axe de rotation x2 par rapport au bâti 12 pour mettre le treuil 11 dans l'état de couplage. Cette étape est mise en oeuvre par les moyens de couplage/découplage,
- la deuxième étape d'enroulement 120.

Dans la réalisation des figures 2 et 3, les tambours 13 et 14 sont concentriques. Ce mode de réalisation permet de proposer un dispositif de manutention simple et léger. Les deux tambours peuvent, par exemple, être entraînés en rotation par rapport au bâti, lorsque le treuil est dans l'état de découplage et dans l'état de couplage, par un même arbre lui-même entraîné en rotation par un unique moteur. Les moyens de couplage/découplage peuvent être réalisés de façon très simple en montant le premier tambour solidaire de l'arbre, en montant le deuxième tambour en liaison pivot sur le premier arbre et en prévoyant un coupleur permettant de rendre le deuxième tambour alternativement solidaire de l'arbre et libre en rotation autour de l'axe de rotation x1 par rapport à l'arbre.

Les moyens couplage/découplage, tout comme les premiers moyens de couplage/découplage qui seront décrits ultérieurement, sont, par exemple, des moyens classiques pour l'homme du métier qui sont, par exemple, réalisés sous forme d'un embrayage ou bien basés sur un frein couplé à une mâchoire solidaire d'une des parties ou bien sur un moteur couplé à une couronne dentée ou encore un pion de liaison.

Le dispositif de manutention à tambours concentriques est particulièrement adapté au stockage d'un dispositif sous-marin 1 présentant un corps remorqué 4, par exemple une antenne linéaire d'émission, réalisé sous la forme d'un objet cylindrique à section circulaire ou non, par exemple à section sensiblement en forme de goutte d'eau. Le corps remorqué cylindrique 4 peut venir en appui sur un enroulement du câble tracteur 2, préalablement réalisé autour du premier tambour 13, sur chaque spire d'une couche de cet enroulement, ce qui est favorable à une bonne stabilité du corps remorqué 4 sur le premier tambour 13.

Lorsque, lors de la première étape d'enroulement, un corps remorqué 4 vient en appui sur le premier tambour 13 sous l'effet de la rotation du premier tambour, c'est-à-dire sous l'effet de la traction exercée sur le corps remorqué, par le câble 2 lors de cette rotation, directement ou via un système d'attache reliant le corps remorqué au câble, la traction exercée par le câble maintient le corps en appui sur le premier tambour 13 sans qu'il ne soit nécessaire de prévoir des moyens de fixation pour fixer le corps remorqué 4 au premier tambour 13. Cette traction est maintenue lors de la deuxième étape d'enroulement. Cela évite une intervention humaine pour assurer cette fixation ou des moyens coûteux pour protéger le corps d'éventuels chocs qui pourraient être dus à une déstabilisation du corps. Par ailleurs, ce type de corps remorqué peut être stocké dans volume compact formé autour du tambour 13.

Le dispositif de manutention est apte à mettre en oeuvre un procédé de déploiement du dispositif selon l'invention initialement stocké par le dispositif de manutention. Le procédé de déploiement comprend les étapes suivantes :
- une première étape de déploiement, lors de laquelle le deuxième tambour 14, du treuil 11 qui est dans l'état de couplage, est entraîné en rotation autour du deuxième axe de rotation de sorte à dérouler le corps allongé souple du deuxième tambour 14,
- une étape de sortie du corps remorqué 4 du volume délimité par le deuxième tambour 14,
- une deuxième étape de déploiement, lors de laquelle le premier tambour 13 du treuil 11 qui se trouve dans l'état de découplage, est entraîné en rotation autour de l'axe de rotation x1, par rapport au bâti 12 de sorte à venir dérouler le câble tracteur 2 du premier tambour 13.

La première étape de déploiement est avantageusement précédée de l'étape de couplage 110 et l'étape de sortie du corps remorquée est avantageusement précédée de l'étape de découplage 80 et éventuellement de l'étape d'immobilisation 90.

L'étape de sortie du corps remorqué peut faire partie de la deuxième étape de déploiement. Cette deuxième étape de déploiement est alors réalisée par entraînement du premier tambour 13 en rotation autour du premier axe x1 de sorte à venir extraire le corps remorqué du volume délimité par le deuxième tambour 14 au travers de l'ouverture de réception 15 puis de sorte à dérouler le câble tracteur 2 du premier tambour 13.

En variante, l'étape de sortie peut précéder la deuxième étape de déploiement.

Dans le deuxième mode de réalisation représenté en figures 5 à 7, le treuil 211 diffère du treuil 11 des figures précédentes en ce que l'axe x1 est distant de l'axe x2. Ce mode de réalisation permet de stocker, dans le volume délimité par le deuxième tambour 214 un objet de dimensions importantes dans le plan perpendiculaire à l'axe x1 sans avoir à augmenter le diamètre du deuxième tambour 214 de façon significative et/ou de stocker un corps remorqué de forme complexe.

Les axes sont, par exemple, écartés selon un axe horizontal, par état de mer calme, et perpendiculaire à l'axe x1.

Le premier tambour 13 est, par exemple, monté rotatif autour d'un arbre d'axe x1 fixé au deuxième tambour 214, par exemple à une coque 212 du deuxième tambour 214. La coque 212 sera décrite ultérieurement.

Les moyens de couplage/découplage peuvent comprendre des premiers moyens de couplage/découplage permettant alternativement de solidariser et de désolidariser le premier tambour 13 de l'arbre sur lequel il est monté et des moyens d'immobilisation du deuxième tambour, autour de l'axe x2 par rapport au bâti 12 permettant alternativement de solidariser et de désolidariser le deuxième tambour du bâti en rotation autour de l'axe x2. L'état de découplage est obtenu par découplage du premier tambour 13 avec l'arbre autour de l'axe x1 et par immobilisation du deuxième tambour 214 autour de l'axe x2 par rapport au bâti 12. L'état de couplage est obtenu en couplant le premier tambour 13 à l'arbre. Un premier moteur est prévu pour permettre d'entraîner le premier tambour 13 en rotation autour de l'axe x1 par rapport au bâti. Un deuxième moteur est prévu pour permettre d'entraîner le deuxième tambour 214 en rotation autour de l'axe x2 par rapport au bâti.

Dans la réalisation des figures 2 et 3, le deuxième tambour 14 présente, comme visible en figure 3, une coque 114 présentant une forme d'une coque globalement cylindrique dans laquelle est ménagée l'ouverture de réception 15.

Le tambour 14 des figures 2 et 3 est apte à être uniquement à l'état ouvert. Le deuxième tambour 14 est configuré de sorte que l'enroulement d'un élément souple allongé 3 autour du deuxième tambour 14 est possible lorsque le deuxième tambour 14 est à l'état ouvert.

Avantageusement, l'ouverture de réception 115 s'étend sur un angle inférieur ou égal à 20° et, de préférence, inférieur ou égal à 15° pour permettre un enroulement correct du corps allongé souple 3 autour du deuxième tambour 14.

En variante, le treuil 11 des figures 2 et 3 pourrait être apte à être alternativement dans l'état ouvert et dans un état fermé dans lequel l'ouverture de réception est au moins partiellement fermée comme représenté en figures 5 à 7. L'enroulement de l'élément allongé souple est alors possible uniquement à l'état fermé ou à l'état fermé et à l'état ouvert.

Dans la réalisation des figures 5 à 7, le dispositif de manutention 210 diffère du dispositif de manutention des figures 2 et 3, notamment par le deuxième tambour 214 qui se distingue du deuxième tambour 14 des figures 2 et 3, en ce qu'il est apte à être alternativement dans un état ouvert, tel que représenté en figures 5 et 6, dans lequel il présente une ouverture de réception 215 au travers de laquelle le corps remorqué 4 peut passer pour pénétrer à l'intérieur du volume 240 délimité par le deuxième tambour 214 et le premier tambour 13 et entourant le premier tambour 13, et dans un état fermé, tel que représenté en figure 7, dans lequel l'ouverture de réception 215 est au moins partiellement fermée. Cela pourrait également être le cas pour des tambours coaxiaux, tout comme les caractéristiques plus précises de dispositif et de procédé décrites ci-après, prises seules ou en combinaison. Ce type de configuration permet de ménager une grande ouverture de réception dans le tambour et ainsi de recevoir, à l'intérieur du volume délimité par le deuxième tambour 214, des corps remorqués de grande taille, par exemple dans un plan perpendiculaire à l'axe x2. Par ailleurs, une grande ouverture laisse plus de place à une éventuelle manipulation du corps remorqué, par une machine ou un opérateur.

Le deuxième tambour 214 comprend un capot mobile 213 par rapport à une première partie 212 du deuxième tambour 214 et apte à être dans une première position (figures 5 et 6) dans laquelle le capot 213 ouvre le deuxième tambour 214 de sorte qu'il comprenne l'ouverture de réception 215 et dans une deuxième position (figure 7) dans laquelle le capot 213 ferme sensiblement l'ouverture de réception 15 de sorte que le deuxième tambour 214 présente sensiblement une forme cylindrique. Une fente résiduelle laisse avantageusement passer une zone de liaison entre le corps remorqué et le corps allongé souple 3 ou le corps allongé souple 3.

Dans l'exemple non limitatif des figures 5 à 7, le deuxième tambour 214 comprend une coque 212 présentant sensiblement une forme d'une portion angulaire d'un cylindre formé autour de l'axe x2. La coque 212 s'étend angulairement autour de l'axe x2, depuis un premier bord axial 216 sensiblement parallèle à l'axe x2 jusqu'à un deuxième bord axial 217 sensiblement parallèle à l'axe x2. Le capot 213 présente une forme sensiblement complémentaire de la coque 212 et est monté pivotant par rapport à la coque 212 autour d'un axe de rotation du capot x3 parallèle à l'axe x2 à proximité du bord 216 de sorte que le capot 213 est apte à passer de la première position représentée en figure 5 à la deuxième position représentée en figure 7 par une rotation par rapport à la première partie autour de l'axe x3.

Le procédé de stockage (ou de récupération) comprend une étape d'ouverture, mise en oeuvre par des moyens d'ouverture ou par un opérateur, pour faire passer le deuxième tambour de l'état fermé à l'état ouvert. Cette étape d'ouverture peut être mise en oeuvre avant la première étape d'enroulement 100 ou bien pendant ou après la première étape d'enroulement mais avant l'étape 102. Le procédé comprend, après l'étape 102 et, avant l'étape 120, une étape de fermeture du deuxième tambour 214 pour permettre l'enroulement de l'élément allongé 3 autour du deuxième tambour après l'étape 101.

Dans la réalisation des figures 5 à 7, l'étape 102 d'insertion du corps remorqué 4 dans le volume 140 en passant au travers de l'ouverture de réception 15 est réalisée ultérieurement à la première étape d'enroulement, par exemple, par un opérateur humain ou un outillage. En variante, l'étape 102 est réalisée lors de la première étape d'enroulement sous l'effet de la rotation du premier tambour autour de l'axe x1.

Le dispositif de manutention comprend avantageusement des moyens de fixation SF, SP, tels que représentés en figure 7, du corps remorqué 4 au deuxième tambour 214 et, plus particulièrement, à la coque 212, configurés pour rendre le corps remorqué solidaire du deuxième tambour 14 en rotation autour de l'axe x2. Ces moyens de fixation comprennent, par exemple, un support SP destiné à supporter le corps remorqué 4 et fixe par rapport à la coque 212 ou par rapport au capot et des moyens de fixation SF du corps remorqué 4 au support SP. Ce type de moyens peut également être prévu lorsque les tambours sont coaxiaux.

Le deuxième tambour 214 apte à être à l'état ouvert et fermé est, par exemple, configuré, comme sur les figures 5 et 6, de sorte que l'enroulement d'un corps allongé souple, par exemple du corps 3, autour du deuxième tambour 214 est impossible dans l'état ouvert et possible dans l'état fermé.

En variante, le deuxième tambour est configuré de sorte que l'enroulement d'un câble autour du deuxième tambour est possible à l'état ouvert et à l'état fermé. Le capot est, par exemple, du type volet tournant, présentant, par exemple, une forme d'une portion de cylindre d'un diamètre très légèrement inférieur au diamètre du deuxième tambour et apte à pivoter autour de l'axe x2 pour venir fermer ou ouvrir le deuxième tambour.

Comme représenté en figure 2, le treuil peut comprendre deux flasques F1, F2 délimitant les tambours selon l'axe x1. Avantageusement, au moins une flasque présente une ouverture O permettant à un opérateur d'accéder au volume 140 de sorte à permettre la maintenance du corps remorqué 4 stocké dans le volume 140. Ce type de moyens peut également être prévu lorsque les tambours sont coaxiaux.

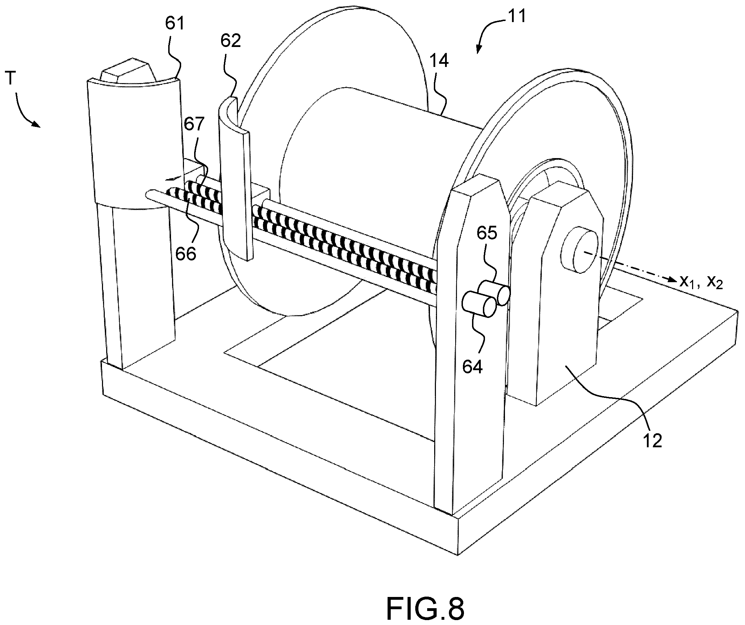

Dans un mode de réalisation avantageux, représenté en figures 8 à 10, le treuil 11 comprend un dispositif de trancannage T permettant d'enrouler de façon ordonnée le câble 2 autour du premier tambour et le corps allongé souple 3 autour du deuxième tambour 14 en fonction de l'état (état de découplage ou, respectivement, état de couplage du treuil 11), lors de l'entraînement du tambour concerné en rotation autour de son axe de rotation par rapport au bâti 12. Pour plus de clarté, l'ouverture de réception 15 n'est pas représentée en figures 8 à 10.

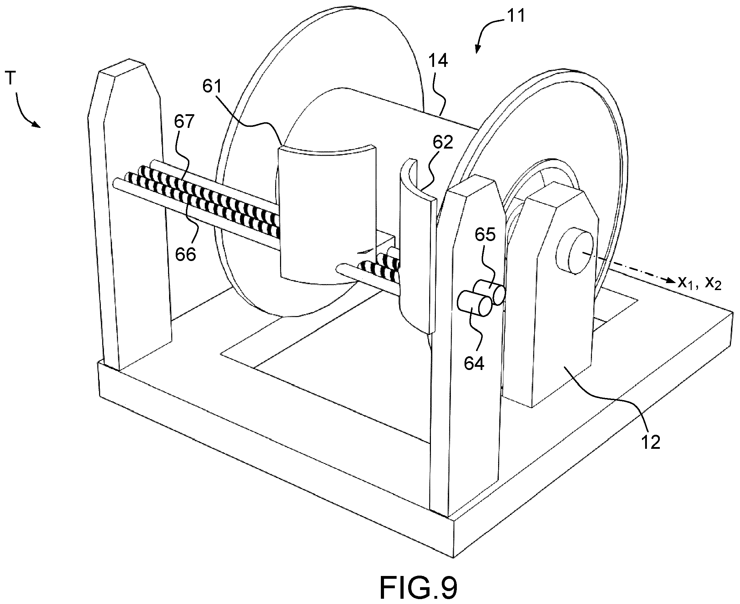

Le dispositif de trancannage T comprend deux déflecteurs latéraux 61 et 62 espacés selon l'axe de rotation x1. Le dispositif de trancannage T est apte à être dans au moins un état de trancannage représenté en figures 8 et 9, dans lequel une première distance sépare les déflecteurs latéraux 61, 62 selon l'axe x1 de sorte à former un guide dans lequel le câble 2, ou respectivement l'élément souple allongé 3, est destiné à coulisser pour venir s'enrouler autour du tambour 13, ou respectivement du tambour 14, du treuil 11 lorsque ce dernier est entraîné en rotation autour de son axe de rotation.

Le dispositif de trancannage T (aussi appelé « spooling gear » ou « winding device » en terminologie anglo-saxonne) dans son état de trancannage, permet de positionner correctement le corps allongé souple 3 ou le câble 2 sur le tambour concerné afin que les spires générées lors de son enroulement autour du tambour concerné soient agencées de manière ordonnée, c'est-à-dire spire par spire, de façon que deux spires adjacentes soient contigües, et couche par couche.

La fonction du guide formé par les déflecteurs 61, 62 dans l'état de trancannage est de guider l'objet allongé souple de façon à s'assurer que la portion du corps allongé souple présenté au tambour est orientée sensiblement perpendiculairement à l'axe de rotation du tambour pour permettre un arrangement correct des spires.

Le dispositif de trancannage T comprend des moyens de guidage permettant de guider les déflecteurs 61, 62 parallèlement à l'axe x1.

Le dispositif de trancannage T comprend également des moyens d'entraînement 64, 65, permettant d'entraîner les déflecteurs selon l'axe x1, dans un même premier sens à la même vitesse, par exemple pour passer de la figure 8 à la figure 9, de sorte que la distance entre les déflecteurs 61, 62 selon l'axe x1, reste la même lors du déplacement des déflecteurs 61, 62 le long de l'axe x1 dans un premier sens. Cela est également valable dans le sens inverse.

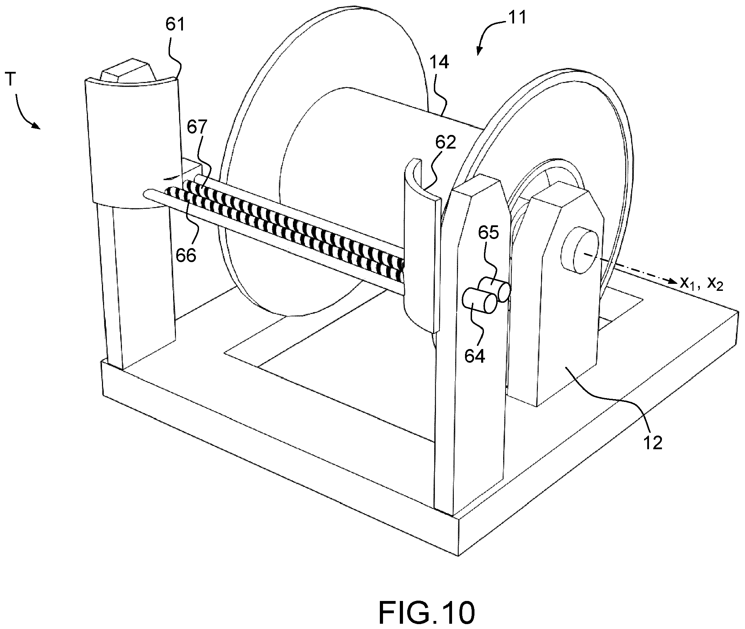

Afin de permettre au corps remorqué 4 de traverser l'ouverture de réception 15, le dispositif de trancannage T est configuré de façon à être apte à être dans un état de réception, tel que représentée en figure 10, dans lequel la distance séparant les déflecteurs 61 et 62 suivant l'axe x1 est plus grande que dans l'état de trancannage, tel que représenté en figures 8 et 9. Cela permet à un corps remorqué 4 allongé selon l'axe longitudinal I sensiblement parallèle au premier axe x1 de passer entre les deux déflecteurs 61 et 62 sans être bloqué pour pouvoir traverser l'ouverture 15.

Avantageusement, une distance supérieure à la longueur du corps remorqué (selon l'axe I) est susceptible de séparer les déflecteurs 61, 62 selon l'axe x1.

A cet effet, les moyens d'entraînement 64, 65 comprennent deux dispositifs d'entraînement 64 et 65 distincts. Chaque dispositif d'entraînement 64 ou 65 permet d'entraîner un des déflecteurs 61 ou 62 en translation indépendamment de l'autre déflecteur par rapport au bâti 12 selon l'axe x1 de sorte que le dispositif de trancannage T est apte à être dans un état de réception dans lequel une distance plus grande que dans l'état de trancannage sépare les deux déflecteurs 61 et 62.

Dans un exemple de réalisation non limitatif représenté schématiquement en figures 8 à 10, les moyens de guidage comprennent deux dispositifs de guidage mettant chacun un des déflecteurs en liaison glissière avec le bâti 12 selon un axe sensiblement parallèle à l'axe x1. Chaque dispositif de guidage comprend une tige filetée 66 ou 67 en liaison hélicoïdale avec un des déflecteurs 61 ou 62. A cet effet, le déflecteur concerné comprend un écrou en prise avec un filetage de la tige filetée 66 ou 67. La tige filetée 66 ou 67 est reliée au bâti 12 par une liaison pivot permettant à la tige filetée 66 ou 67 de tourner par rapport au bâti 12 autour d'un axe longitudinal de la tige filetée 66 ou 67. Cet axe longitudinal est sensiblement parallèle à l'axe x1. Le déflecteur 61 ou 62 est en outre relié au bâti 12 par une liaison empêchant le déflecteur 61 ou 62 de tourner par rapport au bâti 12 autour de l'axe longitudinal de la tige filetée 66 ou 67.

Chaque dispositif d'entraînement 64 ou 65 comprend un moteur rotatif couplé à la tige filetée 66 ou 67 en prise avec un des déflecteur 61 ou 62. La rotation de la tige filetée 66 ou 67 en rotation dans un sens entraîne le déplacement en translation du déflecteur 61 ou 62 dans un sens parallèlement à l'axe x1 et la rotation de la tige filetée 66 ou 67 en sens inverse entraîne le déplacement en translation du déflecteur 61 ou 62 dans l'autre sens parallèlement l'axe x1.

En variante au moteur rotatif, on peut prévoir un dispositif d'entraînement qui est, par exemple du type, moteur linéaire ou crémaillère ou vérin ou attache pendulaire.

L'invention se rapporte également à un système sous-marin comprenant le dispositif de manutention selon l'invention et le dispositif sous-marin. Le câble tracteur 2 du dispositif sous-marin est apte à être relié au premier tambour 13 de sorte à pouvoir venir s'enrouler autour du premier tambour lorsque le premier tambour est entraîné en rotation autour de son axe de rotation par rapport à l'axe x1 alors que le treuil est dans l'état de découplage.

Comme visible en figure 5, le corps remorqué 4 s'étend avantageusement, selon l'axe longitudinal, depuis une première extrémité longitudinale 42 du corps remorqué 4 jusqu'à une deuxième extrémité longitudinale 43 du corps remorqué 4. La première extrémité longitudinale 42 est avantageusement solidaire de la deuxième extrémité longitudinale 43.

Ainsi, l'antenne d'émission linéaire 40 intégrée dans le corps 4 ne se déforme ni lors du remorquage par le bâtiment de surface lorsqu'elle est totalement immergée, ni lors de la récupération de l'antenne à bord du bâtiment de surface, ni lors de son stockage à bord du bâtiment de surface. Cette configuration permet de connaître précisément les caractéristiques du diagramme d'émission de l'antenne. Cette configuration facilite la réalisation technique du dispositif sonar en garantissant l'alignement des transducteurs électroacoustiques. Des étapes fastidieuses de réglage du dispositif sonar pour garantir cette géométrie en remorquage ne sont pas nécessaires.

Un dispositif tracté, qui est le corps remorqué 4 dans l'exemple non limitatif des figures, est configuré et relié au câble tracteur 2 et au corps 3 de sorte que le corps remorqué soit apte à adopter une orientation sensiblement verticale (l sensiblement parallèle à z) lorsqu'il (le corps remorqué) est remorqué via le câble 2 en étant totalement immergé.

Afin de faciliter l'obtention d'une orientation verticale de l'antenne d'émission linéaire 40 en fonctionnement, le dispositif tracté, par exemple le corps remorqué 4 dans l'exemple des figures, est équilibré de sorte à présenter, à l'équilibre hydrostatique, c'est-à-dire lorsqu'il est soumis uniquement à la force de gravité et à la poussée d'Archimède, une orientation d'équilibre hydrostatique dans laquelle l'axe longitudinal I est sensiblement vertical (parallèle à l'axe z) et dans laquelle la première extrémité longitudinale 42 du corps remorqué 4 présente une profondeur supérieure à sa deuxième extrémité longitudinale 43. Autrement dit, dans cette orientation d'équilibre hydrostatique, la première extrémité longitudinale 42 est plus éloignée du niveau moyen de la surface de la mer que la deuxième extrémité longitudinale 43.

A cet effet, le corps remorqué 4 comprend, par exemple, un lest de densité supérieure à la densité de l'eau à proximité de la première extrémité longitudinale 42 et un flotteur présentant une flottabilité positive à proximité de la deuxième extrémité longitudinale 43.

En variante, le corps remorqué comprend un lest de densité supérieure à la densité de l'eau à proximité de la première extrémité longitudinale 42 ou un flotteur présentant une flottabilité positive à proximité de la deuxième extrémité longitudinale 43.

Le corps remorqué 4 peut présenter une flottabilité sensiblement neutre mais ce n'est pas indispensable. En variante, le corps remorqué 4 présente une flottabilité négative ce qui lui permet d'atteindre des profondeurs plus importantes.

Dans la réalisation des figures, le dispositif tracté est le corps remorqué 4.

Dans une variante, le dispositif tracté comprend le corps remorqué et un ensemble d'au moins un lest et/ou un ensemble d'au moins un flotteur. Le corps remorqué étant configuré et l'ensemble d'au moins un lest et/ou l'ensemble d'au moins un flotteur étant configurés et reliés au corps remorqué 4 de sorte que le corps remorqué présente l'orientation requise (l sensiblement vertical) à l'équilibre hydrostatique.

Le dispositif sous-marin comprend en outre un dispositif d'attache, comprenant, comme visible en figure 5, une première suspente 6 et une deuxième suspente 7 présentant sensiblement la même longueur, et reliant chacune le câble tracteur 2 au corps remorqué 4. Autrement dit, la longueur des deux suspentes diffère au plus de 5% de la longueur d'une des suspentes.

Si les longueurs entre les suspentes diffèrent légèrement en respectant la tolérance des 5%, la première suspente 6 présente une longueur inférieure ou égale à la longueur de la deuxième suspente 7 pour une bonne maîtrise de l'orientation du corps remorqué mais les suspentes présentent, de préférence, une même longueur pour une meilleure maîtrise de l'orientation du corps remorqué.

Les suspentes sont des corps allongés souples. Il s'agit, par exemple, de câbles, ou de cordes, de bandes ou de chaînettes. Chaque suspente peut être une portion d'un élément souple plus long que la suspente, se prolongeant au-delà de la première extrémité et/ou de la deuxième extrémité de la suspente ou bien un élément souple de même longueur que la suspente.

Les suspentes 6 et 7 présentent chacune une longueur fixe ou invariable. Autrement dit, les suspentes ne s'allongent pas lors des opérations de mise à l'eau, récupération de stockage et de remorquage du dispositif sous-marin. Ce mode de réalisation présente l'avantage d'être simple, économique et robuste. Il ne nécessite pas de mécanisme pour faire varier les longueurs des suspentes.

En variante, au moins une des deux suspentes 6 et 7 présente une longueur variable. Par exemples, les suspentes 6 et 7 présentent une longueur variable. On peut ainsi faire varier la longueur d'une ou plusieurs suspentes lors de la récupération ou de la mise à l'eau du corps remorqué.

Dans une variante, le dispositif tracté comprend les suspentes 6 et 7 et une des suspentes comprend un lest et l'autre suspente comprend un flotteur de façon que le corps remorqué présente une orientation verticale lorsque le corps remorqué 4 est tracté par le câble tracteur 2.

Le câble tracteur 2 comprend une première extrémité, destinée à être reliée au bâtiment de surface B et plus particulièrement au dispositif de manutention 210, et une deuxième extrémité 2b reliée à une première extrémité 6a de la première suspente 6. Une deuxième extrémité 6b de la première suspente 6 est attachée au corps remorqué en un premier point de fixation 44 du corps remorqué 4 situé à proximité de la première extrémité longitudinale 42. La deuxième suspente 7 comprend une première extrémité 7a reliée à la deuxième extrémité 2b du câble tracteur 2 et une deuxième extrémité 7b attachée au corps remorqué 4 en un deuxième point de fixation 45 du corps remorqué 4 situé à proximité de la deuxième extrémité longitudinale 43. Les deux points de fixation 44 et 45 sont distants l'un de l'autre selon l'axe longitudinal l. Le deuxième point de fixation 45 est solidaire du premier point de fixation 44.

Par point de fixation, on entend le point sur lequel la suspente exerce une force traction sur le corps remorqué 4. La force de traction exercée par le câble tracteur 2 sur la suspente est reportée sur le point de fixation par la suspente.

Dans l'exemple des figures, les extrémités 6a et 7a sont fixes par rapport à l'extrémité 2b du câble tracteur 2.

Les deux suspentes peuvent être attachées au câble tracteur.

Avantageusement, chacune des deux suspentes présente une raideur plus faible que celle du câble tracteur 2.

En variante, une des deux suspentes est une portion du câble tracteur. Autrement dit, le dispositif comprend un câble continu comprenant le câble tracteur et la suspente et présentant un diamètre. Autrement dit, le diamètre du câble continu est sensiblement le même sur toute la longueur du câble continu.

Avantageusement, la raideur du câble continue est sensiblement fixe le long du câble continu. Autrement dit, la raideur présente sensiblement la même valeur sur toute la longueur du câble continu.

Les suspentes 6 et 7 sont agencées de sorte à former un V lorsqu'elles sont tendues. Le V comprend un fond auquel est fixée la deuxième extrémité 2b du câble.

Les suspentes 6, 7 peuvent être fixées de façon définitive ou amovible au corps remorqué 4.

Le corps remorqué 4 peut être relié au câble tracteur par seulement deux suspentes dont la première suspente 6 et la deuxième suspente 7. Dans une variante, le dispositif sonar présente un ensemble d'au moins une suspente intermédiaire reliant le câble tracteur au corps remorqué en étant fixée au corps remorqué en un point de fixation disposé entre le premier point de fixation 44 et le deuxième point de fixation 45.

Le dispositif sous-marin 1 peut comprendre une troisième suspente 8 comprenant une première extrémité 8a attachée au corps remorqué 4 en un troisième point de fixation 46 (qui situé au niveau de la première extrémité longitudinale 42, selon l'axe I, dans la réalisation non limitative de la figure 5) du corps remorqué 4 et une deuxième extrémité 8b reliée à une première extrémité 3a du corps allongé souple 3 et une quatrième suspente 9 comprenant une première extrémité 9a attachée au corps remorqué 4 en un quatrième point de fixation 47 (qui est situé au niveau de la deuxième extrémité longitudinale 43, selon l'axe I, dans la réalisation non limitative de la figure 5) du corps remorqué 4 et une deuxième extrémité 9b reliée à la première extrémité 3a du corps allongé souple 3. Le troisième point de fixation et le quatrième point de fixation 47sont solidaires l'un de l'autre.

Les variantes des positionnements du premier point de fixation et du deuxième point de fixation décrites pour les suspentes 6 et 7 sont applicables aux nouveaux points de fixation des suspentes 8 et 9 au corps remorqué 4. De même, les propriétés et l'agencement de la première suspente et de la deuxième suspente exposées plus haut ainsi que leurs variantes s'appliquent également à la troisième et à la quatrième suspente.

Dans l'exemple des figures, les extrémités 8b et 9b sont fixes par rapport à l'extrémité 3a de l'élément allongé souple 3.

Avantageusement, le troisième point de fixation 46 de la première extrémité 8a de la troisième suspente 8 est situé à la même distance de la première extrémité longitudinale 42 du corps remorqué 4 que le premier point de fixation 44 de la deuxième extrémité 6b de la première suspente 6 et le quatrième point de fixation 47 de la première extrémité 9a de la quatrième suspente 9 est situé à la même distance de la deuxième extrémité longitudinale 43 du corps remorqué 4 que le deuxième point de fixation de la deuxième extrémité 7b de la deuxième suspente 7.

En variante, ces distances ne sont pas toutes égales.

Les suspentes 8 et 9 peuvent présenter sensiblement la même longueur que les suspentes 6 et 7 ou une longueur différente.

Les suspentes 8 et 9 sont agencées de sorte à former un V lorsqu'elles sont tendues. Le V comprend un fond solidaire de la première extrémité 3a du corps allongé souple 3.

Le dispositif sonar présente, de par son dispositif d'attache particulier l'avantage de permettre la récupération et la mise à l'eau simples et relativement sécurisées du corps remorqué 4 depuis un bâtiment de surface B tout en maintenant la géométrie de l'antenne d'émission linéaire 40 fixe ce qui assure un réglage aisé du dispositif. L'utilisation d'un bras basculant ou d'une grue n'est pas indispensable.

Le dispositif sous-marin, initialement immergé de sorte que le corps remorqué 4 est totalement immerge peut être récupéré et mis à l'eau de façon simple depuis le bâtiment de surface B, par un dispositif de manutention léger et simple comprenant : le treuil 211 et un déflecteur 60 étant une surface de friction convexe présentant globalement une forme d'une portion de cylindre (non nécessairement à section circulaire) s'étendant longitudinalement selon un axe du déflecteur x, le déflecteur 60 étant disposé de façon à s'étendre sensiblement horizontalement, par état de mer calme, et sensiblement perpendiculairement à un plan vertical sensiblement parallèle à un axe de traction exercé sur le câble tracteur 2 par le dispositif de manutention lors d'une première étape d'enroulement lors de laquelle le premier tambour 13 est entraîné en rotation autour du premier axe x1 par rapport au bâti 12, de sorte que le câble tracteur 2 vienne s'enrouler autour du premier tambour 13.

Le déflecteur 60 est en outre disposé de façon que la première suspente 6 et la deuxième suspente 7 viennent en appui sur le déflecteur 60 pour être déviées par le déflecteur 60 lors de la première étape d'enroulement de sorte que l'axe longitudinal I s'étende sensiblement parallèlement à l'axe x du déflecteur 60, lorsque le corps remorqué 4 est totalement émergé et suspendu aux suspentes 6 et 7, comme visible en figure 6 et expliqué plus en détails par la suite. Les suspentes 6 et 7 sont alors tendues et linéaires entre le déflecteur 60 et le corps allongé 4. Autrement dit, lorsque le corps remorqué 4 est suspendu aux suspentes 6 et 7 déviées par le déflecteur 60, l'axe longitudinal I est sensiblement parallèle à l'axe du déflecteur x.

En effet, comme représenté en figure 5, lorsque le dispositif sous-marin est remorqué par le bâtiment de surface B, le corps remorqué 4 étant totalement immergé et remorqué via le câble tracteur 2, les deux suspentes 6 et 7 sont sensiblement tendues et le corps remorqué 4 est sensiblement vertical (c'est-à-dire avec son axe longitudinal sensiblement vertical) du fait des forces hydrostatiques et des efforts de traînée agissant sur le corps remorqué lorsque la forme du corps allongé est adaptée, par exemple lorsque la forme du corps remorqué 4 est sensiblement symétrique par rapport à un plan perpendiculaire à l'axe longitudinal I et par rapport à un plan contenant l'axe longitudinal I destiné à contenir le câble tracteur lors du remorquage.

Le câble tracteur 2 est apte à être en appui sur le déflecteur 60 pour être dévié par le déflecteur 60 dans le plan vertical contenant le câble tracteur 2 lors du remorquage du dispositif sonar, le corps allongé étant totalement immergé. Cela est vrai lorsque la vitesse de remorquage du navire est inférieure ou égale à un certain seuil pour une implantation donnée du dispositif de manutention à bord du bâtiment de surface B.

Tant que le corps remorqué 4 est complètement immergé (même à l'arrêt), le corps remorqué 4 reste sensiblement vertical (axe longitudinal I sensiblement vertical) du fait des forces hydrostatiques lorsqu'il est configuré pour être sensiblement vertical lorsqu'il est soumis uniquement à la poussée d'Archimède et à la gravité, par exemple lorsqu'il comprend un flotteur à proximité de la deuxième 43 extrémité et un lest à proximité de la première extrémité 42.

Lors d'une première étape d'enroulement, lors de laquelle le premier tambour 13 est entraîné en rotation autour du premier axe x1, le câble tracteur 2 vient s'enrouler autour du premier tambour 13.

Lorsque la première suspente 6 arrive en appui sur le déflecteur 60 et est déviée par le déflecteur 60 le corps remorqué 4 bascule sous l'effet de son poids, la deuxième extrémité 43 du corps remorqué 4 entraînant avec elle la deuxième extrémité 7b de la deuxième suspente 7 qui tend à rester tendue. Le corps remorqué 4 bascule ainsi progressivement lors de la première étape d'enroulement, c'est-à-dire lorsque la rotation du premier tambour 13 autour de l'axe x1 se poursuit dans le même sens de sorte que le câble 2 exerce sur les suspentes 6, 7, une traction vers le premier tambour dans un plan sensiblement perpendiculaire à l'axe x, jusqu'à ce que la deuxième suspente 7 vienne en appui sur le déflecteur 60 pour être déviée par le déflecteur 60.

Quand les deux suspentes 6 et 7 sont en appui et déviées par le déflecteur 60 elles sont tendues entre le déflecteur 60 et l'objet remorqué 4. Comme les deux suspentes 6 et 7 présentent sensiblement la même longueur et le déflecteur 60 présente une section sensiblement fixe le long de l'axe x, les portions des suspentes 6 et 7 situées entre leurs zones d'appui respectives sur le déflecteur 60 et le corps remorqué 4 présentent la même longueur et le corps remorqué 4 adopte, par état de mer calme, une orientation dite de manutention dans laquelle l'axe longitudinal I est sensiblement parallèle à l'axe x du déflecteur 60.

En poursuivant la rotation du premier tambour 13 dans le même sens, le corps remorqué 4 totalement émergé suspendu aux suspentes 6 et 7 présente, par état de mer calme, l'attitude de manutention dans laquelle son axe longitudinal I est sensiblement parallèle à l'axe du déflecteur comme représenté en figure 6. Par état de mer agitée, l'orientation du corps remorqué 4 peut varier mais il est maintenu de plus en plus fermement dans l'orientation de manutention à mesure que le corps remorqué 4 se rapproche du déflecteur 60, c'est-à-dire à mesure que la longueur des portions des suspentes 6 et 7 situées entre leurs zones d'appui sur le déflecteur 60 et le corps remorqué 4 diminue. La liberté de mouvement du corps remorqué 4 se réduit, jusqu'à ce qu'il vienne en appui sur le déflecteur 60 et soit récupéré à bord du bâtiment de surface B comme visible en figure 6.

A l'inverse, lors d'un procédé de mise à l'eau du dispositif sous-marin, le corps remorqué est maintenu sensiblement dans l'orientation de manutention par les deux suspentes en appui sur le déflecteur jusqu'à son immersion.

Le dispositif d'attache par suspentes 6, 7 du dispositif sous-marin permet de sécuriser la mise à l'eau et la récupération d'un corps remorqué 4 depuis un bâtiment de surface B ce qui limite le risque de chocs entre le corps remorqué 4 et la poupe PO du bâtiment de surface B. Ce dispositif sous-marin est, du fait de la simplicité et de la relative sécurisation de la récupération et de la mise à l'eau du corps remorqué 4 depuis un bâtiment de surface, bien adapté dans le cas d'emploi à bord d'un USV. Par ailleurs, la récupération du corps remorqué 4 dans l'orientation de manutention permet de prévoir une ouverture de hauteur réduite à l'arrière du bâtiment de surface et, d'éviter la formation de tranchées dans le pont du bâtiment de surface et de limiter la taille de la zone de stockage de ce corps selon un axe sensiblement horizontal et perpendiculaire à l'axe x. L'orientation de manutention favorise également son stockage stable et peu encombrant sur le tambour d'un treuil d'axe sensiblement parallèle à l'axe x.

L'axe x est avantageusement sensiblement perpendiculaire à l'axe longitudinal du bâtiment de surface. Cela permet de stocker le corps remorqué en étant maintenu en roulis et tangage.

Le déflecteur 60 présente sensiblement une forme d'une portion angulaire, réalisée autour de l'axe x, d'un cylindre d'axe x. Dans le mode de réalisation particulier et non limitatif des figures 5 à 7, le déflecteur 60 est formé par un rouleau monté tournant par rapport au bâtiment porteur autour de son axe de rotation x. Cela permet de limiter les frottements entre le déflecteur 60 et le dispositif sonar lors des opérations de mise à l'eau et de récupération. En variante, le rouleau R est fixe par rapport au bâtiment de surface B.

Dans la réalisation des figures 5 à 7, le dispositif de manutention comprend un ensemble de rouleaux R cylindriques adjacents d'axes longitudinaux sensiblement parallèles les uns aux autres et alignés selon un axe sensiblement horizontal par état de mer calme et perpendiculaire à l'axe x.

Avantageusement, les rouleaux R sont configurés et disposés de sorte que le corps remorqué 4, orienté de sorte que l'axe I soit sensiblement parallèle à l'axe x, soit apte à reposer sur deux rouleaux R qui empêchent le mouvement du corps remorqué 4 selon l'axe selon lequel les rouleaux R sont alignés. Ainsi, les deux rouleaux adjacents forment un nid permettant de stocker le corps remorqué 4.

L'axe selon lequel les rouleaux R sont alignés peut être horizontal par état de mer calme, comme visible en figures 5 à 7, ou incliné par rapport à l'horizontale par état de mer calme. L'inclinaison est favorable à un maintien stable du corps remorqué en tangage sous l'effet de la gravité et de la traction des suspentes. En outre, l'inclinaison autorise une remise à l'eau aisée.

Avantageusement, les rouleaux R sont dimensionnés de sorte que le corps remorqué 4 reposant sur deux rouleaux adjacents soit uniquement en contact physique direct avec les deux rouleaux R adjacents. Cela permet de limiter les risques de détérioration du corps remorqué 4.

En figures 5 à 7, l'axe x du déflecteur 60 est sensiblement parallèle au premier axe de rotation x1 du premier tambour 13. Cela permet une insertion aisée du corps remorqué 4 dans le volume 240 au travers l'ouverture de réception 215. Ces axes pourraient en variante ne pas être parallèles, par exemple dans le cas où une poulie dévierait, dans un plan horizontal, l'axe du câble tracteur 2 entre le déflecteur 60 et le premier tambour.

En figures 5 à 7, les suspentes 6 et 7 sont fixées aux extrémités longitudinales du corps allongé. Autrement dit, les points de fixation 44 et 45 sont situés au niveau, c'est-à-dire à distance nulle, des extrémités longitudinales respectives 42 et 43 selon l'axe longitudinal I. Ce mode de réalisation permet de limiter les risques de coincement des extrémités du corps allongé lors de sa récupération.

Dans une variante moins avantageuse, au moins un des deux points de fixation 44 et 45 est situé à distance, selon l'axe longitudinal I, de l'extrémité longitudinale à proximité de laquelle il se situe.

Avantageusement, la distance séparant le premier point de fixation 44 de la première extrémité longitudinale 42 selon l'axe I est sensiblement la même que la distance séparant le deuxième point de fixation 45 de la deuxième extrémité longitudinale 43 selon l'axe l. Cela permet de favoriser l'orientation verticale de l'antenne d'émission longitudinale en remorquage. En variante, ces deux distances sont différentes mais c'est moins avantageux pour la stabilité du corps remorqué en remorquage.

Dans la réalisation non limitative des figures 5 et 6, les deux suspentes 6 et 7 sont trop courtes pour que la première suspente 6 soit en appui sur le déflecteur 60 et déviée par le déflecteur 60 alors que le corps remorqué 4 est encore immergé. Le basculement du corps remorqué 4 sous l'effet de son poids lorsque l'extrémité 43 sort de l'eau est limité par la traction exercée par le corps allongé souple 3 sur le corps remorqué 4 à sa sortie de l'eau. La traction exercée par l'élément allongé 3 souple sur le corps remorqué 4 via la troisième suspente 8 et la quatrième suspente 9 limite l'inclinaison du corps remorqué 4 par rapport au plan vertical contenant le câble de traction 2. Par ailleurs, la traction exercée par l'élément souple allongé 3 sur le corps remorqué l'éloigne de la poupe du bâtiment de surface. La présence du corps allongé souple permet de limiter les risques de heurts avec le bâtiment de surface.

En variante, si les deux suspentes 6 et 7 sont suffisamment longues, pour que la première suspente 6 soit en appui sur le déflecteur 60 et déviée par le déflecteur alors que le corps remorqué 4 est encore immergé, alors la traction exercée par le corps allongé souple 3 sur le corps remorqué retient le corps remorqué et ralentit son basculement à sa sortie de l'eau jusqu'à ce que les deux suspentes viennent en appui sur le déflecteur 60 et soient déviées par le déflecteur 60. Ainsi, l'orientation du corps remorqué est encore mieux maitrisée.

En figures 5 à 7, le dispositif de manutention comprend un déflecteur 60 disposé en amont du premier tambour 13, vu du corps remorqué 4 la première suspente 6 et de la deuxième suspente 7 initialement immergées, lors de la première étape d'enroulement. Autrement dit, les suspentes sont aptes à venir en appui sur le déflecteur 60 avant de venir s'enrouler autour du premier tambour 13 lors de la première étape d'enroulement.

Plus particulièrement, le déflecteur 60 est disposé à proximité de la poupe du bâtiment de surface B de façon que le corps remorqué 4 présente l'orientation de manutention (x sensiblement parallèle à I) avant son arrivée à bord du bâtiment de surface B. Le déflecteur 60 est, par exemple, le premier élément du dispositif de manutention et/ou du bâtiment de surface, rencontré par les suspentes lors d'un procédé de récupération/stockage du dispositif sonar initialement déployé et remorqué par le bâtiment de surface. Cela permet de limiter les risques de heurts entre le corps remorqué 4 et la poupe du navire. Cela permet également d'éviter la conception ouvertures de grandes dimensions à l'arrière du bâtiment porteur pour permettre de récupérer une antenne linéaire d'émission et d'éviter de créer une tranchée (« recess » en terminologie anglo-saxonne) dans le pont principal du bâtiment de surface afin de pouvoir stocker une antenne linéaire d'émission trop haute pour être logée entre le pont principal et le pont supérieur.

Le déflecteur 160 du dispositif de manutention des figures 2 et 3 diffère de celui des figures 5 à 7 en ce qu'il est plus proche du premier tambour 13 et, plus particulièrement, de l'ouverture 15 de sorte que le corps remorqué traverse l'ouverture 15 sensiblement dans l'orientation de manutention (l sensiblement parallèle à l'axe du déflecteur selon lequel le déflecteur 160 s'étend longitudinalement). Cela permet de limiter les risques de heurts entre le corps remorqué 4 et le deuxième tambour 14 lorsqu'il traverse l'ouverture de réception 15 et ainsi de limiter les risques du coincement à son arrivée sur le tambour. Cela permet également, lorsque l'axe du déflecteur est sensiblement parallèle à l'axe x1, d'amener naturellement et sans intervention d'un outillage ou d'un opérateur, le corps remorqué 4 dans une orientation favorable à la traversée de l'ouverture de réception 15 et à son stockage stable et aisé sur le premier tambour 13 (axe I sensiblement parallèle à l'axe x1) le corps remorqué 4 pouvant être maintenu en appui sur le premier tambour 13 sur toute sa longueur. Dans l'exemple non limitatif des figures 2 et 3, le déflecteur 160 est disposé en amont du tambour 13 et monté sur le deuxième tambour 14 de sorte à délimiter l'ouverture de réception 15.

De façon plus générale, un déflecteur 160 peut être disposé de sorte que le corps remorqué 4 traverse l'ouverture 15 sensiblement dans l'orientation de manutention et/ou arrive en appui sur le tambour 13 sensiblement dans l'orientation de manutention.

Ce type de déflecteur 160 est disposé entre la poupe du bâtiment de surface et le premier tambour 13 par exemple, entre un déflecteur 60 et le premier tambour 13. Ce déflecteur 160 fait, par exemple, partie du treuil en étant, par exemple, disposé en amont du premier tambour 13, par exemple en amont de l'ouverture de réception 15 (lors de la première étape d'enroulement), ou au niveau de l'ouverture de réception 15.

Différents déflecteurs occupant différentes positions décrites ci-dessus peuvent, en variante, être prévus dans un même dispositif de manutention.

Il est à noter que le premier tambour 13 constitue également un déflecteur. Dans une variante non représentée, le dispositif de manutention comprend un seul déflecteur formé par le premier tambour 13.

Le système sous-marin n'est nullement limité à un dispositif sous-marin du type comprenant un corps remorqué 4 attaché au câble 2 et au corps allongé souple 3 comme sur les figures 5 à 7. En variante aux figures 5 à 7, le corps allongé est, par exemple, relié au câble tracteur par l'intermédiaire d'un corps sur lequel il est monté pivotant autour d'un axe de rotation de façon à pouvoir passer de la position verticale en remorquage immergé à une position de capture dans laquelle son axe longitudinal s'étend sensiblement parallèlement à l'axe x1 lors de la première phase de remorquage.

Le dispositif de commande pour commander le dispositif de manutention (moyens de couplage/découplage, premiers moyens de couplage/découplage, moyens d'entraînement, moyens d'immobilisation, moyens d'ouverture) peut comprendre un ou plusieurs circuits électroniques dédiés ou un circuit à usage général. Chaque circuit électronique peut comprendre une machine de calcul reprogrammable (un processeur ou un micro contrôleur par exemple) et/ ou un calculateur exécutant un programme comprenant une séquence d'instructions et/ou une machine de calcul dédiée (par exemple un ensemble de portes logiques comme un FPGA un DSP ou un ASIC, ou tout autre module matériel).

Dans les exemples représentés sur les figures, le treuil comprend un unique deuxième tambour 14. Dans une variante plus complexe, le treuil comprend un ensemble de plusieurs deuxièmes tambours tels que définis précédemment. Ces deuxièmes tambours présentent des diamètres différents de sorte à s'entourer les uns les autres. Chaque deuxième tambour 14 présente une ouverture donnant accès au volume situé entre ce deuxième tambour et le tambour de diamètre directement inférieur. Cela permet, par exemple, de récupérer différents corps remorqués dans le volume délimité entre chaque deuxième tambour et le tambour de diamètre directement inférieur ou de pouvoir enrouler des portions d'éléments allongés souples de différentes souplesses sur des tambours de diamètres différents.

Tous les tambours peuvent être couplés en rotation et chaque tambour peut être découplé en rotation des autres tambours.

Dans les exemples représentés sur les figures 2 et 3 et 5 à 7, le dispositif sous-marin comprend un unique corps remorqué.

En variante, le dispositif sous-marin comprend un ensemble de plusieurs corps remorqués. Le dispositif de manutention peut alors comprendre un ou plusieurs deuxièmes tambours.

Chaque corps remorqué est avantageusement allongé selon un axe longitudinal et présentent la même longueur mais ce n'est pas obligatoire.

Le dispositif sous-marin comprend, par exemple, un ensemble de plusieurs corps remorqués 4. Les corps remorqués 4 sont reliés les uns aux autres, au câble tracteur 2 et à l'élément allongé souple 3 de sorte à être répartis le long d'une ligne de remorquage courbe définie par le câble tracteur et l'élément allongé souple lorsque le dispositif sous-marin est remorqué par le bâtiment de surface, l'ensemble de corps remorqués étant répartis le long de la ligne de remorquage.

Un exemple de ce type de dispositif est représenté en figure 12. Le dispositif sous-marin 1000 comprend plusieurs corps remorqués 4 répartis le long de la ligne de remorquage définie par le câble 2 et le corps allongé souple 3 et tracée en traits pointillés entre les deux. Les corps remorqués 4 sont reliés les uns aux autres par des lignes intermédiaires 1001a, 1001b.

Le système est, par exemple, configuré de sorte à stocker ou permettre de stocker plusieurs corps remorqués en appui sur le premier tambour 13 ou, de façon plus générale, entre le premier tambour 13 et le deuxième tambour 14 ou de sorte à stocker ou permettre de stocker différents corps remorqués dans les volumes successifs définis entre les tambours adjacents successifs ou en appui sur des tambours successifs.

Dans l'exemple de la figure 12, les corps remorqués 4 sont reliés deux à deux par des lignes intermédiaires 1001a, 1001b via des suspentes. Chaque corps intermédiaire est fixé à une première et une deuxième suspente 6, 7 le reliant au câble tracteur et à une troisième et une quatrième suspente 8, 9 le reliant au corps allongé souple.

En variante, dans le dispositif sous-marin 1002 de la figure 13, les corps remorqués 4 sont reliés deux à deux par des ensembles de lignes intermédiaires 1003,1004 et 1005, 1006. Un des corps remorqués est fixé à une première et une deuxième suspente 6, 7 le reliant au câble. Ce corps remorqué est relié au corps remorqué adjacent par plusieurs lignes intermédiaires 1003,1004, sensiblement parallèles en remorquage. Ce corps remorqué est lui-même relié au dernier corps remorqué adjacent par des lignes intermédiaires 1005,1006. Le dernier corps remorqué est fixé à une troisième et une quatrième suspente 8, 9 le reliant au corps allongé souple.

Chaque ligne intermédiaire est un élément allongé souple pouvant être réalisés sous la forme d'un câble, par exemple un câble électrotracteur. Chaque ligne intermédiaire peut comprendre au moins un transducteur électroacoustique. Elle peut intégrer une antenne acoustique, par exemple, une antenne de réception acoustique.

## Revendications

1. Dispositif de manutention (10) destiné à être installé sur un bâtiment de surface (B) pour permettre de stocker et déployer un dispositif sous-marin (1) destiné à être remorqué par le bâtiment de surface et comprenant un câble tracteur (2), un corps allongé souple (3) et un ensemble d'au moins un corps remorqué (4), situé entre le corps allongé souple (3) et le câble tracteur (2), le dispositif de manutention (10) comprenant un treuil (11) comprenant un bâti (12), destiné à être fixé à une structure (S) du bâtiment de surface (B), et un premier tambour (13) apte à tourner par rapport au bâti (12) autour d'un premier axe de rotation (x1) et un ensemble d'au moins un deuxième tambour (14) entourant le premier tambour (13) et étant apte à tourner par rapport au bâti (12) autour d'un deuxième axe de rotation (x2) sensiblement parallèle au premier axe de rotation (x1), le treuil (11) étant apte à être dans un état de découplage dans lequel le premier tambour (13) et le deuxième tambour (14) sont découplés en rotation autour du premier axe de rotation (x1) et du deuxième axe de rotation (x2), de sorte à permettre d'enrouler le câble tracteur (2) autour du premier tambour (13) lors d'une première étape d'enroulement lors de laquelle le premier tambour (13) est entraîné en rotation autour du premier axe (x1), le deuxième tambour (14) étant apte à être dans un état ouvert, dans lequel le deuxième tambour (14) présente une ouverture de réception (15) susceptible d'être traversée par le corps remorqué (4) pour pénétrer à l'intérieur du volume qui entoure le premier tambour (13) et qui est entouré par le deuxième tambour (14), le treuil (11) étant apte à être dans un état de couplage dans lequel le premier tambour (13) et le deuxième tambour (14) sont couplés en rotation autour du deuxième axe de rotation (x2), de sorte à permettre d'enrouler le corps allongé souple (3) autour du deuxième axe de rotation (x2) lors d'une deuxième étape d'enroulement lors de laquelle le deuxième tambour (14) est entraîné en rotation autour du deuxième axe (x2), dans lequel le corps remorqué (4) intègre une antenne d'émission d'ondes acoustiques, le corps allongé souple (3) comprenant une antenne de réception (50) comprenant une pluralité de transducteurs électro-acoustiques répartis le long du corps allongé souple (3) et dans lequel le corps remorqué (4) est un corps allongé selon un axe longitudinal (l) destiné à s'étendre selon un axe vertical en remorquage, l'antenne d'émission comprenant une pluralité de transducteurs électro-acoustiques (41) répartis selon l'axe longitudinal (l).

2. Dispositif de manutention selon la revendication précédente, le deuxième tambour (14) est apte à être dans une position angulaire de réception, autour du deuxième axe (x2) par rapport au bâti (12), dans laquelle l'ouverture de réception (15) est destinée à être traversée par le câble tracteur (2) et le corps remorqué (4) lors de la première étape d'enroulement.

3. Dispositif de manutention selon l'une quelconque des revendications précédentes, dans lequel l'ouverture de réception (15) est allongée selon le premier axe de rotation (x1).

4. Dispositif de manutention selon l'une quelconque des revendications précédentes, dans lequel le premier tambour (13) et le deuxième tambour (14) sont concentriques.

5. Dispositif de manutention selon l'une quelconque des revendications 1 à 3, dans lequel le deuxième axe de rotation (x2) est distant du premier axe de rotation (x1).

6. Dispositif de manutention selon l'une quelconque des revendications précédentes, dans lequel le deuxième tambour 2(14) est apte à être alternativement dans l'état ouvert et dans un état fermé dans lequel l'ouverture de réception (15) est au moins partiellement fermée.

7. Dispositif de manutention selon la revendication précédente, dans lequel au moins un deuxième tambour (214) comprend un capot mobile (213) par rapport à une première partie du deuxième tambour, le capot étant apte à être dans une première position dans laquelle le capot (213) ouvre le deuxième tambour (214) de sorte qu'il comprenne l'ouverture de réception et dans une deuxième position dans laquelle le capot (213) ferme sensiblement l'ouverture de réception de sorte que le deuxième tambour présente sensiblement une forme cylindrique.

8. Dispositif de manutention selon l'une quelconque des revendications précédentes, comprenant un dispositif de trancannage (T) apte à ordonner un enroulement du câble tracteur (2) sur le treuil (11), le dispositif de trancannage (T) comprenant deux déflecteurs latéraux (61, 62) espacés selon le premier axe de rotation (x1), le dispositif de trancannage (T) étant apte à être dans un état de trancannage dans lequel une faible distance sépare les déflecteurs latéraux (61, 62) selon le premier axe de rotation (x1) et dans un état de réception dans lequel une plus grande distance sépare les déflecteurs (61, 62) .

9. Dispositif de manutention selon l'une quelconque des revendications précédentes, comprenant un ensemble de plusieurs deuxièmes tambours.

10. Système sous-marin comprenant le dispositif de manutention (10) selon l'une quelconque des revendications précédentes et le dispositif sous-marin (1).

11. Système sous-marin selon la revendication 10, dans lequel le corps remorqué est un corps hydrodynamique compact présentant une forme générale aplatie et étant suspendu au câble tracteur lorsque le dispositif de manutention est déployé.

12. Système sous-marin selon l'une quelconque des revendications 10 ou 11, dans lequel le dispositif de manutention est configuré de façon à permettre de stocker le corps remorqué (4) dans un volume entourant le premier tambour et étant entouré par le deuxième tambour sans que le corps remorqué (4) ne sorte radialement du volume.

13. Système sous-marin selon l'une quelconque des revendications 10 à 12, dans lequel le système sous-marin est configuré de sorte que, lors de la première étape d'enroulement, le corps remorqué traverse l'ouverture de réception (15) dans une orientation dans laquelle l'axe longitudinal (l) est sensiblement parallèle au premier axe de rotation (x1) et/ou de sorte que le corps remorqué (4) arrive à proximité du bâtiment porteur dans l'orientation dans laquelle l'axe longitudinal (l) est sensiblement parallèle au premier axe de rotation (x1).

14. Système selon l'une quelconque des revendications 10 à 13, dans lequel le dispositif de manutention est configuré pour mettre en oeuvre les étapes suivantes, lors d'un procédé de stockage du dispositif sous-marin initialement déployé :
la première étape d'enroulement (100) dans laquelle le premier tambour (13) du treuil (11) se trouvant dans l'état de découplage, est entraîné en rotation autour du premier axe de rotation (x1) par rapport au bâti (12) de sorte à venir enrouler le câble tracteur (2) autour du premier tambour (13), le câble tracteur (2) passant au travers de l'ouverture de réception (15), et de sorte que le corps remorqué (4) rentre dans le volume (140) délimité par le deuxième tambour (14) au travers de l'ouverture de réception (15), suivie d'une étape d'enroulement (120) dans laquelle le deuxième tambour (14) du treuil se trouvant dans l'état de couplage, est entraîné en rotation autour du deuxième axe de rotation (x2) de sorte à enrouler l'élément linéaire souple autour du deuxième tambour (14).

15. Système sous-marin selon l'une quelconque des revendications 10 à 14, dans lequel le dispositif sous-marin comprend un ensemble d'une pluralité de corps remorqués.

## Patentansprüche

1. Handhabungsvorrichtung (10) zur Installation auf einem Überwasserschiff (B), um das Lagern und Ausbringen einer Unterwasservorrichtung (1) zu ermöglichen, die von dem Überwasserschiff geschleppt werden soll und ein Zugseil (2), einen flexiblen länglichen Körper (3) und eine Anordnung aus mindestens einem geschleppten Körper (4) umfasst, die sich zwischen dem flexiblen länglichen Körper (3) und dem Zugseil (2) befindet, wobei die Handhabungsvorrichtung (10) eine Winde (11), die ein Gestell (12) zum Befestigen an einer Struktur (S) des Überwasserschiffs (B) umfasst, und eine erste Trommel (13), die in Bezug auf das Gestell (12) um eine erste Drehachse (x1) drehbar ist, und eine Anordnung aus mindestens einer zweiten Trommel (14) umfasst, die die erste Trommel (13) umgibt und in Bezug auf das Gestell (12) um eine zweite Drehachse (x2) drehbar ist, die im Wesentlichen parallel zur ersten Drehachse (x1) verläuft, wobei die Winde (11) in einem Entkupplungszustand sein kann, in dem die erste Trommel (13) und die zweite Trommel (14) um die erste Drehachse (x1) und die zweite Drehachse (x2) drehentkuppelt sind, so dass das Zugseil (2) in einem ersten Aufwickelschritt, in dem die erste Trommel (13) um die erste Achse (x1) gedreht wird, um die erste Trommel (13) gewickelt werden kann, wobei die zweite Trommel (14) in einem offenen Zustand sein kann, in dem die zweite Trommel (14) eine Aufnahmeöffnung (15) aufweist, die von dem geschleppten Körper (4) durchquert werden kann, um in das Innere des Volumens einzutreten, das die erste Trommel (13) umgibt und das von der zweiten Trommel (14) umgeben ist, wobei die Winde (11) in einem Kopplungszustand sein kann, in dem die erste Trommel (13) und die zweite Trommel (14) um die zweite Drehachse (x2) drehbar gekoppelt sind, so dass der flexible längliche Körper (3) in einem zweiten Aufwickelschritt, in dem die zweite Trommel (14) um die zweite Achse (x2) gedreht wird, um die zweite Drehachse (x2) gewickelt werden kann, wobei der geschleppte Körper (4) eine Sendeantenne für akustische Wellen enthält, wobei der flexible längliche Körper (3) eine Empfangsantenne (50) umfasst, die eine Vielzahl von elektroakustischen Wandlern umfasst, die entlang des flexiblen länglichen Körpers (3) verteilt sind, und wobei der geschleppte Körper (4) ein entlang einer Längsachse (l) langgestreckter Körper ist, der sich beim Schleppen entlang einer vertikalen Achse erstrecken soll, wobei die Sendeantenne eine Vielzahl von entlang der Längsachse (l) verteilten elektroakustischen Wandlern (41) umfasst.

2. Handhabungsvorrichtung nach dem vorhergehenden Anspruch, wobei die zweite Trommel (14) in einer Aufnahmewinkelposition um die zweite Achse (x2) in Bezug auf das Gestell (12) sein kann, in der die Aufnahmeöffnung (15) während des ersten Aufwickelschritts von dem Zugseil (2) und dem geschleppten Körper (4) durchquert werden soll.

3. Handhabungsvorrichtung nach einem der vorhergehenden Ansprüche, wobei die Aufnahmeöffnung (15) entlang der ersten Drehachse (x1) langgestreckt ist.

4. Handhabungsvorrichtung nach einem der vorhergehenden Ansprüche, wobei die erste Trommel (13) und die zweite Trommel (14) konzentrisch sind.

5. Handhabungsvorrichtung nach einem der Ansprüche 1 bis 3, wobei die zweite Drehachse (x2) von der ersten Drehachse (x1) beabstandet ist.

6. Handhabungsvorrichtung nach einem der vorhergehenden Ansprüche, wobei die zweite Trommel 2(14) abwechselnd im offenen Zustand und in einem geschlossenen Zustand sein kann, in dem die Aufnahmeöffnung (15) mindestens teilweise geschlossen ist.

7. Handhabungsvorrichtung nach dem vorhergehenden Anspruch, wobei mindestens eine zweite Trommel (214) eine relativ zu einem ersten Teil der zweiten Trommel bewegliche Haube (213) umfasst, wobei die Haube in einer ersten Position, in der die Haube (213) die zweite Trommel (214) öffnet, so dass sie die Aufnahmeöffnung umfasst, und in einer zweiten Position sein kann, in der die Haube (213) die Aufnahmeöffnung im Wesentlichen verschließt, so dass die zweite Trommel im Wesentlichen eine zylindrische Form aufweist.

8. Handhabungsvorrichtung nach einem der vorhergehenden Ansprüche, eine Querwickelvorrichtung (T) umfassend, die ein Aufwickeln des Zugseils (2) auf die Winde (11) veranlassen kann, wobei die Querwickelvorrichtung (T) zwei seitliche Leitbleche (61, 62) umfasst, die entlang der ersten Drehachse (x1) voneinander beabstandet sind, wobei die Querwickelvorrichtung (T) in einem Querwickelzustand, in dem ein geringer Abstand die seitlichen Leitbleche (61, 62) entlang der ersten Drehachse (x1) trennt, und in einem Aufnahmezustand sein kann, in dem ein größerer Abstand die Leitbleche (61, 62) trennt.

9. Handhabungsvorrichtung nach einem der vorhergehenden Ansprüche, die eine Anordnung von mehreren zweiten Trommeln umfasst.

10. Unterwassersystem, das die Handhabungsvorrichtung (10) nach einem der vorhergehenden Ansprüche und die Unterwasservorrichtung (1) umfasst.

11. Unterwassersystem nach Anspruch 10, wobei der geschleppte Körper ein kompakter hydrodynamischer Körper ist, der eine allgemein abgeflachte Form aufweist und am Zugseil aufgehängt ist, wenn die Handhabungsvorrichtung im Einsatz ist.

12. Unterwassersystem nach Anspruch 10 oder 11, wobei die Handhabungsvorrichtung so konfiguriert ist, dass der geschleppte Körper (4) in einem Volumen gelagert werden kann, das die erste Trommel umgibt und von der zweiten Trommel umschlossen wird, ohne dass der geschleppte Körper (4) radial aus dem Volumen austritt.

13. Unterwassersystem nach einem der Ansprüche 10 bis 12, wobei das Unterwassersystem so konfiguriert ist, dass im ersten Aufwickelschritt der geschleppte Körper die Aufnahmeöffnung (15) in einer Orientierung durchläuft, in der die Längsachse (l) im Wesentlichen parallel zur ersten Drehachse (x1) verläuft, und/oder so, dass der geschleppte Körper (4) in der Orientierung, in der die Längsachse (l) im Wesentlichen parallel zur ersten Drehachse (x1) verläuft, in die Nähe des Trägerschiffs gelangt.

14. System nach einem der Ansprüche 10 bis 13, wobei die Handhabungsvorrichtung in einem Verfahren des Lagerns der anfänglich ausgebrachten Unterwasservorrichtung zum Ausführen der folgenden Schritte konfiguriert ist:
dem ersten Aufwickelschritt (100), in dem die erste Trommel (13) der im Entkupplungszustand befindlichen Winde (11) um die erste Drehachse (x1) in Bezug auf das Gestell (12) gedreht wird, um das Zugseil (2) um die erste Trommel (13) zu wickeln, wobei das Zugseil (2) durch die Aufnahmeöffnung (15) läuft, und so, dass der geschleppte Körper (4) durch die Aufnahmeöffnung (15) in das von der zweiten Trommel (14) begrenzte Volumen (140) eintritt, gefolgt von einem Aufwickelschritt (120), in dem die zweite Trommel (14) der im Kopplungszustand befindlichen Winde um die zweite Drehachse (x2) gedreht wird, um das flexible lineare Element um die zweite Trommel (14) zu wickeln.

15. Unterwassersystem nach einem der Ansprüche 10 bis 14, wobei die Unterwasservorrichtung einen Satz aus einer Vielzahl von geschleppten Körpern umfasst.

## Claims

1. A handling device (10) intended to be installed on a surface vessel (B) to enable storage and deployment of an underwater device (1) intended to be towed by the surface vessel and comprising a traction cable (2), a flexible elongate body (3) and an assembly of at least one towed body (4), situated between the flexible elongate body (3) and the traction cable (2), the handling device (10) comprising a winch (11) comprising a frame (12) intended to be attached to a structure (S) of the surface vessel (B) and a first drum (13) capable of turning, relative to the frame (12), about a first rotation axis (x1) and an assembly of at least one second drum (14) which surrounds the first drum (13) and is capable of turning relative to the frame (12) about a second rotation axis (x2) substantially parallel to the first rotation axis (x1), the winch (11) being capable of being in a decoupled state in which the first drum (13) and the second drum (14) are rotationally decoupled about the first rotation axis (x1) and the second rotation axis (x2) so as to allow the traction cable (2) to be wound around the first drum (13) during a first winding step during which the first drum (13) is rotated about the first axis (x1), the second drum (14) being capable of being in an open state, wherein the second drum (14) has a receiving opening (15) that the towed body (4) is capable of passing through to enter the interior of the volume that surrounds the first drum (13) and that is surrounded by the second drum (14), the winch (11) being capable of being in a coupled state in which the first drum (13) and the second drum (14) are rotationally coupled about the second rotation axis (x2), so as to allow the flexible elongate body (3) to be wound around the second rotation axis (x2) during a second winding step during which the second drum (14) is rotated about the second axis (x2), wherein the towed body (4) incorporates an antenna for emission of acoustic waves, the flexible elongate body (3) comprising a receiving antenna (50) comprising a plurality of electro-acoustic transducers distributed along the flexible elongate body (3) and wherein the towed body (4) is a body elongated along a longitudinal axis (l) intended to extend along an axis that is vertical during towing, the transmit antenna comprising a plurality of electro-acoustic transducers (41) distributed along the longitudinal axis (l).

2. The handling device according to the preceding claim, the second drum (14) being capable of being in a receiving angular position about the second axis (x2) relative to the frame (12) in which the receiving opening (15) is intended to be passed through by the traction cable (2) and the towed body (4) during the first winding step.

3. The handling device according to any one of the preceding claims, in which the receiving opening (15) is elongated along the first rotation axis (x1).

4. The handling device according to any one of the preceding claims, wherein the first drum (13) and the second drum (14) are concentric.

5. The handling device according to any one of claims 1 to 3, wherein the second rotation axis (x2) is at a distance from the first rotation axis (x1).

6. The handling device according to any one of the preceding claims, wherein the second drum 2(14) is capable of being alternately in the open state and in a closed state in which the receiving opening (15) is at least partly closed.

7. The handling device according to the preceding claim, wherein at least one second drum (214) comprises a cap (213) mobile relative to a first part of the second drum, the cap being capable of being in a first position in which the cap (213) opens the second drum (214) so that it comprises the receiving opening and in a second position in which the cap (213) substantially closes the receiving opening so that the second drum has a substantially cylindrical shape.

8. The handling device according to any one of the preceding claims, comprising a traverse winding device (T) that is capable of ordering winding of the traction cable (2) on the winch (11), the traverse winding device (T) comprising two lateral deflectors (61, 62) spaced along the first rotation axis (x1), the traverse winding device (T) being capable of being in a traverse winding state in which a small distance separates the lateral deflectors (61, 62) along the first rotation axis (x1) and in a receiving state in which a greater distance separates the deflectors (61, 62).

9. The handling device according to any one of the preceding claims, comprising an assembly of multiple second drums.

10. An underwater system comprising the handling device (10) according to any one of the preceding claims and the underwater device (1).

11. The underwater system according to claim 10, wherein the towed body is a compact hydrodynamic body having a flattened general shape and being suspended from the traction cable when the handling device is deployed.

12. The underwater system according to any one of claims 10 to 11, wherein the handling device is configured so as to enable storage of the towed body (4) in a volume that surrounds the first drum and that is surrounded by the second drum without the towed body (4) exiting the space radially.

13. The underwater system according to any one of claims 10 to 12, wherein the underwater system is configured so that, during the first winding step, the towed body passes through the receiving opening (15) in an orientation in which the longitudinal axis (l) is substantially parallel to the first rotation axis (x1) and/or so that the towed body (4) arrives in the vicinity of the carrier vessel in the orientation in which the longitudinal axis (l) is substantially parallel to the first rotation axis (x1).

14. The system according to any one of claims 10 to 13, wherein the handling device is configured to execute the following steps during a process of storing the initially deployed underwater device:
the first winding step (100) in which the first drum (13) of the winch (11), being in the decoupled state, is rotated about the first rotation axis (x1) relative to the frame (12) so as to come to wind the traction cable (2) around the first drum (13), the traction cable (2) passing through the receiving opening (15), and so that the towed body (4) enters into the space (140) delimited by the second drum (14) through the receiving opening (15), followed by a winding step (120) in which the second drum (14) of the winch, being in the coupled state, is rotated about the second rotation axis (x2) so as to wind the flexible linear element around the second drum (14).

15. The underwater system according to any one of claims 10 to 14, wherein the underwater device comprises an assembly of a plurality of towed bodies.
